(19) Europäisches Patentamt

European Patent Office

Office européen des brevets

(11) **EP 3 931 526 B1**

(12) **EUROPEAN PATENT SPECIFICATION**

(45) Date of publication and mention of the grant of the patent:
**30.08.2023 Bulletin 2023/35**

(21) Application number: **20705102.0**

(22) Date of filing: **17.02.2020**

(51) International Patent Classification (IPC):
**G01B 17/02** *(2006.01)*    **G01N 29/22** *(2006.01)*
**G01N 29/30** *(2006.01)*

(52) Cooperative Patent Classification (CPC):
**G01B 17/02; G01N 29/221; G01N 29/30**

(86) International application number:
**PCT/GB2020/050366**

(87) International publication number:
**WO 2020/174214 (03.09.2020 Gazette 2020/36)**

(54) **METHOD OF CALIBRATING AN ULTRASOUND PROBE AND CORRESPONDING INSPECTION APPARATUS AND METHOD**

VERFAHREN ZUR KALIBRIERUNG EINER ULTRASCHALLSONDE UND ENTSPRECHENDE INSPEKTIONSVORRICHTUNG UND VERFAHREN

PROCÉDÉ DE CALIBRATION D'UNE SONDE ULTRASONIQUE ET DISPOSITIF ET PROCÉDÉ D'INSPECTION CORRESPONDANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2019 EP 19159994**

(43) Date of publication of application:
**05.01.2022 Bulletin 2022/01**

(73) Proprietor: **Renishaw PLC**
**Wotton-under-Edge, Gloucestershire GL12 8JR (GB)**

(72) Inventors:
• **HALL, Liam David**
**Edinburgh EH14 4AP (GB)**
• **DING, Yining**
**Edinburgh EH14 4AP (GB)**

(74) Representative: **Rolfe, Edward William et al**
**Patent Department**
**Renishaw plc**
**New Mills**
**Wotton-under-Edge**
**Gloucestershire GL12 8JR (GB)**

(56) References cited:
**GB-A- 2 076 966    US-A1- 2011 257 531**
**US-A1- 2017 284 971**

**Description**

The present invention relates to a method and an apparatus, in particular those involving ultrasound probes which can acquire ultrasound measurements of an object. In particular, the invention relates to a method of calibrating an inspection apparatus, in particular an inspection apparatus comprising a pulse-echo probe, such as an ultrasound probe.

It is known to measure the dimensions of manufactured objects to ensure they conform to tolerance. In the case of high value components, such as aerospace turbine blades, the external form of an object can be measured to sub-micron accuracy using a surface contact probe mounted on a coordinate measuring machine (CMM). Examples of techniques for measuring the positions of multiple points on the surface of an object using a CMM equipped with a surface contact (e.g. scanning) probe are described in US5189806 and WO2009/024783.

In addition to surface measurements, it is often necessary to measure the internal features of an object. For example, turbine blades are typically hollow to enable them to be both light-weight and strong for operation at extreme temperatures and pressures. The internal inspection of such hollow turbine blades is typically carried out using ultrasound inspection apparatus, for example ultrasound immersion systems or an ultrasound thickness gauging probe.

Ultrasonic immersion systems generally involve submerging the test piece entirely within a water bath. A single pulse-echo transducer, or a pair of transmit/receive transducers, are appropriately positioned relative to the part using a computer controlled robotic arm. The water provides good acoustic coupling with the part but the arrangement is expensive and complex, especially for larger parts. An example of an ultrasonic immersion system is described in GB2440959.

Ultrasound thickness gauging probes do not require the part to be immersed in water but instead typically rely on the localised application of a couplant material (e.g. a coupling gel or liquid) to the part. Such probes tend to be handheld, but it has been described previously how such probes may be mounted to the quill of a CMM. For example, US2009/0178482 describes an ultrasound probe mounted to the quill of a CMM. The ultrasound probe of US2009/0178482 includes a gimbal mount that allows the sensor to align with the surface normal of the object when contact with the object is established. As explained in paragraph 19 of US2009/0178482 a couplant material, such as a gel or grease, must be applied to the relevant areas of the object prior to inspection to ensure adequate acoustic coupling between the ultrasound probe and the object. The need to apply a localised couplant material, plus the limited angular range of the gimbal mount, makes ultrasound inspection of the internal properties of parts using such a system a time consuming and complex task. Handheld ultrasound thickness gauging probes that use a dry-couplant layer are also known, but the coupling efficiency and performance of such devices can be poor, especially when operation at higher ultrasound frequencies is required.

Gb2076966 discloses a method and apparatus for measuring the thicknesses of a cladding layer and a base metal layer by applying pulses of ultrasonic waves on the side of a sample opposite the cladding layer using a contact probe. The reflected waves are sensed by a crack detector and displayed on an oscilloscope. By eliminating noise and interference, the position of the interface between the cladding layer and base metal layer are measured from a pulse produced due to the discontinuity of acoustic impedance at the interface.

WO2016/051147 describes various configurations of ultrasound probes for mounting on a positioning apparatus such as a CMM. In particular, WO2016/051147 describes ultrasound probes comprising a deformable coupling element (in contrast to ultrasound probes having a hard/rigid coupling element). The deformable coupling element can provide both ultrasound coupling to the part and also act as a delay line. WO2016/051147 also describes that the coupling element can comprise a self-lubricating material which preferably releases a lubricant, such as water and/or oil, from its external surface in a controlled manner. The self-lubricating material may comprise an oleophilic elastomer, optionally a hydrophilic elastomer.

The present invention relates to improvements in methods for calibrating and using an ultrasound probe, and improvements in associated apparatus. For example, there is described herein a method of calibrating an ultrasound probe, in which the method comprises measuring the signal received by the ultrasound probe at a plurality of different orientations between the ultrasound probe and a calibration artefact in order to find an axis of optimum signal of the ultrasound probe.

According to a first aspect of the invention, there is provided a method of calibrating an ultrasound probe having a coupling element for engaging the surface of an object to be inspected, in which the ultrasound probe and a calibration artefact are provided on a positioning apparatus having at least one axis about which the relative orientation of the ultrasound probe and calibration artefact can be changed, he method comprising, in any suitable order: i) for a plurality of different relative orientations between the ultrasound probe and the calibration artefact about the at least one axis, measuring the signal received by the ultrasound probe; and ii) from said measurements, determining at least one calibration parameter which is indicative of at least one axis of optimum signal of the ultrasound probe, and recording the at least one calibration parameter for subsequent use.

Determining and recording the at least one calibration parameter can mean that when the ultrasound probe is subsequently used to inspect an artefact, the calibration parameter can be used to help determine how to orient the probe in order to achieve a desired signal. Various particular advantages which can result from the present invention are described in more detail below.

Preferably, step i) and/or ii) is performed automatically. Accordingly, the method can comprise processing means, for example electronics, configured to effect the obtaining of measurements of step i), and/or to determine at least one calibration parameter which is indicative of at least one axis of optimum signal of the ultrasound probe (i.e. step ii)). Such processing means, for example electronics, can comprise hardwired electronics, a field-programmable gate array (FPGA), software running on a generic processor, or a combination thereof. The processing means, for example electronics, may or may not be a part of the positioning apparatus. For example, the positioning apparatus might comprise a controller for controlling the positioning apparatus. The controller could comprise the processing means/electronics. Optionally, a unit other than the controller comprises the processing means/electronics.

The calibration parameter can be recorded in electronic or non-electronic format. For example, the calibration parameter could be recorded in an electronic memory device, for example in electronically erasable programmable read only memory (EEPROM).

As will be understood, the calibration parameter can comprise a record, for example a data record. The calibration parameter can comprise at least one value. The calibration parameter could comprise a vector. As explained in more detail below, the positioning apparatus and the ultrasound probe can have their own, distinct coordinate spaces. In particular, the ultrasound probe's coordinate space could rotate relative to the positioning apparatus' coordinate space (e.g. about the at least one axis). The calibration parameter, for example the calibration vector, could be defined in the ultrasound probe's coordinate space. The calibration parameter could be described as a misalignment vector. As explained in more detail below, the calibration parameter could be a vector associated with an axis of optimal signal within a known calibration artefact.

Advantageously, the ultrasound transducer could be arranged to operate in a pulse-echo mode. The signal received by ultrasound probe can comprise at least one, for instance at least two, for example all, reflected echoes from the projected waveform entering the object the ultrasound probe is coupled to. Conveniently, the ultrasound return signal could be analysed to allow thickness and/or flaw measurements of the object to be obtained. Such analysis may be based on the "Mode-3" method of analysing successive back wall reflections present in an "A-scan" that is described in more detail below. However, alternative analysis techniques (e.g. so-called Mode-1 or Mode-2 techniques) could be used as necessary. The ultrasound inspection apparatus may also be configured to operate in any one of a plurality of different ultrasound measurement modes. The base module preferably includes a processor for analysing ultrasound signals received by the ultrasound transducer. Alternatively, the ultrasound signal could be analysed by an off-probe processor (e.g. in an external interface or using an offline computer).

The ultrasound probe can comprise at least one transducer for emitting an ultrasound waveform. The ultrasound probe can comprise at least one transducer for sensing an ultrasound waveform. Optionally, the ultrasound probe comprises the at least one transducer for emitting an ultrasound waveform and the at least one transducer for sensing an ultrasound waveform. Optionally, the at least one transducer for sensing the ultrasound waveform is the same sensor that is used to sense the ultrasound waveform. The transducer may comprise a piezoelectric element. Preferably, the transducer excites longitudinal sounds waves (L-waves). As explained in more detail below, preferably, the at least one calibration parameter is indicative of the ultrasound probe's ultrasound axis, for example, the L-wave axis. The ultrasound probe can comprise a single-channel probe. For example, the ultrasound probe could comprise just one active element/transducer performing pulse echo operation. Optionally, the ultrasound probe could comprise a phased array probe. In this case, the misalignment measured could be compensated for in subsequent measurements within the probe using suitable beam-steering methods (e.g. inducing an appropriate phase/time delay between the array channels in order to steer the beam in the optimal L-wave axis).

The ultrasound probe may excite and receive ultrasound in any known way. The ultrasound probe/inspection apparatus may operate at a high frequency. For example, the operating frequency may be greater than 5MHz, greater than 10MHz or more preferably greater than 15MHZ. In an example embodiment, the operating frequency is around 20MHz. Higher frequencies (e.g. such as those above 15MHZ) have been found to be particularly useful for probes with a deformable tip, and in particular have been found to provide higher resolution measurements. It has been found that at lower frequencies more noise can occur inside the deformable tip.

The invention is particularly advantageous with an ultrasound probe that has a deformable coupling element. In other words, the coupling element can be a soft coupling element (as opposed to a rigid/hard coupling element). Accordingly, the method can comprise loading the coupling element onto the surface of the object such that the coupling element is deformed out of shape. For example, the coupling element can comprise an elastomer. For example, the coupling element can comprise a polymer, for example a superabsorbent polymer.

The coupling element can be wet, e.g. with lubricant. Any appropriate lubricant can be used. Advantageously, the coupling element can comprise a self-lubricating material. A self-lubricating material preferably releases a lubricant, such as water and/or oil, from its external surface in a controlled manner. The self-lubricating material may comprise an oleophilic elastomer. Advantageously, the self-lubricating material comprises a hydrophilic elastomer. For example, the hydrophilic elastomer may comprise an incompressible gelatinous hydrophilic elastomer material such as a lightly cross-linked hydrophilic vinyl elastomer or a super absorbent polymer hydrogel, for example Sodium polyacrylate. An example of a high water content hydrophilic polymer chain compounds is MMA:VP (i.e. a Copolymer of N-vinyl pyrrolidone and methyl methacylate). For this compound, the water content can vary from about 35% to 95% and excellent acoustic properties are exhibited although the tear strength decreases as the water content is increased. Conveniently, the contact element/self-lubricating material is provided as a sphere. A preferred embodiment of the coupling element comprises at least one hydrophilic elastomer sphere.

As will be understood, the coupling element needs to be engaged with the surface (e.g. front wall) of the artefact when measuring a signal. Step i) could comprise disengaging the coupling element between measurements in order to change the relative orientation of the ultrasound probe and calibration artefact. However, preferably, step i) comprises changing the relative orientation of the ultrasound probe and the calibration artefact whilst the ultrasound probe's coupling element remains engaged with the calibration artefact. This can speed up the measurement/calibration process.

Preferably, the position of the ultrasound probe's coupling element on the surface of the calibration artefact is substantially the same for each of the plurality of different relative orientations. Accordingly, there could be no lateral motion of the tip. This can speed up the measurement/calibration process. It can also provide a better calibration result and/or simplify the calibration procedure.

Different relative orientations between the ultrasound probe and the calibration artefact can mean different "elevation angles" (or different "lean angles"/"angles of attack/"angle of incidence") of the ultrasound probe (with respect to the calibration artefact's surface normal). In other words, different relative orientations of the ultrasound probe and calibration artefact could mean different angles between the ultrasound probe's axis (e.g. it's mechanical axis and/or ultrasound axis, for instance L-wave axis) and the surface normal of the calibration artefact. Different relative orientations between the ultrasound probe and the calibration artefact can mean different "azimuth angles" or different "directions of attack" of the probe (and does not necessarily result in a change in the "elevation angle") (with respect to the calibration artefact's surface normal). Optionally, different relative orientations between the ultrasound probe and the calibration artefact mean different "elevation" and "azimuth" angles of the ultrasound probe relative to the surface of the artefact.

The plurality of different orientations of step i) can be configured such that ultrasound measurements are obtained with the probe and artefact at different rotational relative orientations about two (for example, imaginary) (for example, perpendicular) axes which extend through and perpendicular to the surface normal of the artefact at the point of contact between the ultrasound probe and artefact. For example, step i) can comprise changing the orientation of the ultrasound probe relative to the artefact (e.g. moving/rolling the ultrasound probe) about two (e.g. imaginary) (e.g. perpendicular) axes which extend through the point of contact between the ultrasound probe and artefact, and perpendicular to the surface normal of the artefact at the point of contact between the ultrasound probe and artefact. This can enable data (e.g. pulse-echo or backwall energy information) in more than one dimension (with respect to the probe) to be obtained. Accordingly, information about the axis of optimum signal can be determined for more than one degree of freedom/dimension with respect to the ultrasound probe.

As explained in more detail below, the positioning apparatus can comprise at least one axis, for example at least two axes, about which the relative orientation of the ultrasound probe and calibration artefact can be changed. Step i) can comprise: for a plurality of different relative orientations between the ultrasound probe and the calibration artefact about at least one axis (for example about at least one of the at least two axes), measuring the signal received by the ultrasound probe. Step i) can comprise: for a plurality of different relative orientations between the ultrasound probe and the calibration artefact about at least two of the at least two axes, measuring the signal received by the ultrasound probe. In other words, the positioning apparatus can comprise at least a first and optionally at least a second axis about which the relative orientation of the ultrasound probe and calibration artefact can be changed. The method can comprise the ultrasound probe obtaining signals at a plurality of different combinations of angular orientations of the first and second axes. Accordingly, the method can comprise changing the relative orientation about the first axis, and optionally also changing the relative orientation about the second axis (between measurements). This can enable data (e.g. pulse-echo or backwall energy information) in more than one dimension (with respect to the probe) to be obtained. For instance, performing an orbital motion (referred to below) can comprise changing the orientation about both first and second axes.

The ultrasound probe can comprise a body portion distal the coupling element. In other words, the ultrasound probe can comprise a body portion at a first end, and the coupling element at the second end. The ultrasound probe can be mounted to the positioning apparatus via the body portion. The ultrasound probe (for example the body portion) and the positioning apparatus (for example, the articulated member/rotary head) can comprise corresponding mounting features for enabling the ultrasound probe to be mounted to the positioning apparatus, in particular which enable the ultrasound probe to be automatically loaded and unloaded on and off the positioning apparatus. In other words, preferably, the ultrasound probe is auto-changeable on the positioning apparatus, e.g. to/from a rack located in the positioning apparatus' operating volume. The ultrasound probe (for example the body portion) and positioning apparatus can comprise complementary features of repeatable mount, for example complementary features of a kinematic mount. At least one of the ultrasound probe and positioning apparatus can comprise at least one magnet for retaining the ultrasound probe on the positioning apparatus.

Step i) can comprise moving the body portion of the ultrasound probe about the point at which the coupling element engages the surface, to cause a change in the relative orientation (and for example, in which the point at which the coupling element engages the surface is fixed during such motion). The signal received by the ultrasound probe can be measured at different positions of the main body, e.g. whilst the body portion is being moved about the point at which the coupling element engages the surface. Step i) can comprise causing the body portion to orbit about the point at which the coupling element engages the surface. Such a motion could be referred to as an orbital motion. The orbital motion may or may not be a complete orbit (e.g. the body portion might only partially complete an orbit about the point at which the coupling element engages the surface, a "partial orbit"). The angle of the orbit (e.g. the angle between the ultrasound probe's mechanical axis and the surface normal of the artefact, in other words the "lean" or "elevation" angle) could remain constant during an orbital motion.

Step i) might comprise performing a plurality of orbital motions (in other words, a plurality of complete or partial orbits). A plurality of nominally identical orbital motions could be performed. For example, step i) could comprise performing the same orbital motion more than once (e.g. in order to gather multiple signals for the same angle of orbit, for instance so as to obtain an averaged signal). Step i) could comprise performing a plurality of orbital motions, in which the angle of orbit (in other words, the ultrasound probe's "elevation", "lean" or "incidence" angle) is different for different orbits.

The angle of the orbit could change in a step-wise manner between different orbits, or optionally could change continuously (e.g. in a spiralling manner). Accordingly, an orbital motion could cause the ultrasound probe (e.g. its axis, such as its mechanical axis and/or ultrasound axis) to describe a conical shape. Likewise, a set of orbital motions could cause the ultrasound probe to describe a set of conical shapes (or a spiralling conical shape if the angle of the orbit changes continuously). Advantageously, an orbital motion could be caused/performed by the synchronous relative motion of the ultrasound probe and the calibration artefact about at least two axes. For example, in the case of the ultrasound probe being mounted on an articulated head comprising two axes, an orbital motion could be caused/performed by continuous, back-and-forth rotation about both of the two axes, which are synchronised with each other and with motion of the positioning apparatus which causes the articulated head to describe a circular motion.

The method can comprise recording at least one array of data related to the signal received by the ultrasound probe. The array could be a one-dimensional array, a two-dimensional array, or three-dimensional array. The elements in an array could comprise data associated with the signal received by the ultrasound probe for a given/particular relative orientation (of the ultrasound probe and calibration artefact). The elements in an array could comprise data related to the signal strength/quality. For example, the elements in an array can comprise data associated with any signal metric related to at least one of the amplitude, the duration, the time-of arrival, or the time-integrated energy of one or any time-gated combination of the backwall echoes. For example, the elements in an array could comprise a value indicative of the peak signal (e.g. peak backwall energy) received by the ultrasound probe at particular relative orientation. In particular, for example, the elements in an array could comprise a value indicative of the peak of the envelope of the first backwall echo signal (e.g. the envelope given by a Hilbert transform or any other signal demodulation method). Optionally, the elements in an array could comprise a value indicative of any time-gated summation of backwall energy extracted from within the measurement windows of an A-scan.

The elements in the array could comprise a value determined from a plurality of readings/signals (at a particular relative orientation). For instance, the elements in the array could comprise an averaged value. For example, the elements in the array could comprise a value representative of an average peak signal, (e.g. obtained for a given relative orientation, over at least two readings) (at a particular relative orientation). As will be understood, such averaging could be performed by dwelling at a particular orientation and taking multiple readings. Optionally, such averaging could be achieved by continuously moving the ultrasound probe through the different orientations (in other words continuously changing the orientation of the ultrasound probe about the at least one axis) whilst taking ultrasound measurements as the probe is moving/changing orientation, and moving through the same orientation more than once (e.g. by performing repeated orbital motions). As explained in more detail below, in such a case, a measurement/reading taken as the probe is moving could be allocated to a particular bin depending on the orientation at the point the measurement/reading was taken. In this case, it might be that different bins have different numbers of measurements/readings, because its measurements/readings are not necessarily taken at set orientations. Accordingly, the method could comprise keeping a record of the number of times a measurement/reading has been added to a bin. Such a value can then be used to determine an average measurement/reading.

The array could be referred to as a map (e.g. coordinate map, for instance polar coordinate map). Accordingly, the method can comprise determining a map of the signal received by the ultrasound probe with respect to the relative orientation between the ultrasound probe and the calibration artefact.

The method can comprise obtaining an initial calibration parameter which provides an initial indication of the axis of optimum signal. The method can comprise, subsequently controlling the ultrasound probe (e.g. on the basis of the initial indication of the axis of optimum signal) to obtain more signal measurements and determining a refined indication of the axis of optimum signal. In other words, the method can comprise using the initial calibration parameter to determine how to control the relative orientation of the ultrasound probe and artefact in order to obtain a refined indication of the axis of optimum signal. Accordingly, the at least one calibration parameter can comprise/be based on the refined indication of the axis of optimum signal. For example, obtaining an initial calibration parameter can comprise obtaining a first set of signal measurements from a first set of (e.g. orbital) motions, and then determining a refined indication of the axis of optimum signal can comprise obtaining a second set of signal measurements from a second set of (e.g. orbital) motions, in which the resolution of the angles at which measurements are taken is smaller for the second set of motions than that of the first set of motions (e.g. in which the difference in orbit (e.g. elevation/lean) angles is smaller for the second set of orbital motions than that of the first set of orbital motions).

As described in detail below, the at least one calibration parameter can be indicative of the ultrasound probe's longitudinal wave ("L-wave") axis. This can be found using a calibration artefact with parallel front and back walls, as described in more detail below, although a calibration artefact with non-parallel front and back walls could also be used (e.g. with additional information about the geometry and sound speeds). However, as will be understood, with other types of ultrasound probe, such as a normal incidence shear wave probe, the calibration parameter could be indicative of a different type of axis, such as a shear wave axis, assuming the coupling element employed supports shear-wave mode propagation. Similarly, for the more commonly used L-wave ultrasound probe, the at least one calibration parameter (e.g. indicative of the probe's ultrasound axis) could, in theory, be determined using the Shear waves generated by off-normal axis measurement and the subsequent mode conversion against the front-wall of any suitably designed (e.g. refractive) (e.g. wedge) calibration artefact.

As will be understood, a calibration artefact is an artefact (e.g. object, part) used during the calibration of the ultrasound probe. Determining the at least one calibration parameter can comprise using known information about the orientation and/or geometry of the calibrated artefact. The calibration artefact can comprise planar front and back walls. The calibration artefact can comprise parallel front and back walls. The calibration artefact can be isotropic. Optionally, the calibration artefact is metallic. The method can comprise measuring the calibration artefact to determine its position, orientation and/or form of at least the front wall of the artefact (and/or the back wall of the artefact). For example, the method can comprise a position measurement probe taking measurements of at least the front wall of the artefact. The method can comprise a position measurement probe taking measurements of the back wall of the artefact. Optionally, the arrangement of the front and back wall is already known (e.g. to be parallel). Accordingly, the method could comprise taking measurements of at least the front wall of the artefact in order to determine the orientation of the calibration artefact/the orientation of the plane of the front wall. Measurements can be obtained using a contact probe, for example a touch-trigger probe, or contact analogue/scanning probe. As will be understood, the position measurement probe can be calibrated, accordingly the method could comprise calibrating the position measurement probe.

The method can comprise using the calibration parameter. For example, the method can comprise using the calibration parameter to determine how to orient the ultrasound probe and/or object, in a subsequent inspection. The object can be an object other than the calibration artefact. The method can comprise using the calibration parameter to determine how to orient the ultrasound probe and/or object such that ultrasound waves (e.g. L-waves) propagate along a desired propagation vector within the object. The method can comprise taking into consideration the effect of refraction/Snells law to determine how to orient the ultrasound probe and/or object. The method can further comprise, for a given point on an object to be inspected, determining a desired inspection axis/vector (in other words a "target vector"). The method can comprise using the at least one calibration parameter to determine a desired relative orientation of the ultrasound probe and object such that the axis of optimum signal and desired inspection axis (e.g. target vector) are arranged in accordance with predetermined criteria. The predetermined criteria could be that the axis of optimum signal and desired inspection axis (e.g. target vector) are substantially aligned.

The method can comprise bringing the ultrasound probe into engagement with an object, in accordance with the desired relative orientation of the ultrasound probe and object (e.g. such that the axis of optimum signal and the desired inspection axis are arranged in accordance with the aforementioned predetermined criteria). For example, the method can comprise bringing the ultrasound probe coupling element into engagement with said point on the object, in accordance with the desired relative orientation of the ultrasound probe and object. The method optionally comprises subsequently changing the relative orientation of the probe and object about the at least one axis (and optionally about at least two axes) to determine if a more optimum signal can be found at a different orientation. Such a process could be referred to as a discovery-mode search. Such a process could comprise taking into consideration refraction/Snells law to determine how to conduct the search. With a probe that has been calibrated according to the invention, the search can be more targeted than if the probe were not calibrated, thereby providing a speed benefit.

The positioning apparatus can comprise a coordinate positioning apparatus. The coordinate positioning apparatus may include a machine tool, a robot, an arm, an x-y scanner or a crawler. In a preferred embodiment, the coordinate positioning apparatus comprises a coordinate measuring machine. The CMM may be a Cartesian (e.g. bridge type) of CMM or a non-Cartesian (e.g. hexapod) type of CMM.

The ultrasound probe could be mounted on an articulated member, comprising the at least one axis. The articulated member could be a continuously articulated member. Optionally, the articulated member comprises an indexed articulated member (e.g. the articulated member comprises a set number of discrete orientations at which the articulated member can be locked). The articulated member can comprise at least one motor for controlling the orientation of the ultrasound probe about the at least one axis.

The articulated member could comprise a rotary head, for example mounted on the positioning apparatus, e.g. on a CMM, for instance on the end of the quill (also known as the Z-column) of a CMM. Accordingly, as per the above, the rotary head may comprise a single rotary axis, two rotary axes or three rotary axes. The rotary head advantageously comprises at least two rotary axes. The rotary head may comprise at least three rotary axes.

According to another aspect of the invention there is provided an inspection apparatus comprising: an ultrasound probe; and a record which comprises at least one calibration parameter indicative of at least one axis of optimum signal of the ultrasound probe, in which the inspection apparatus is configured to relatively orient the ultrasound probe and object using the record, and to obtain an ultrasound measurement of the object with the ultrasound probe and object at the relative orientation. For instance, the inspection apparatus can comprise computer program code comprising instructions configured to control the inspection apparatus so as to orient the ultrasound probe based on the record.

As will be understood, configurations described above in connection with the first aspect of the invention are equally applicable here, and vice versa.

The axis of optimum signal can be different to the ultrasound probe's mechanical axis. As will be understood, the mechanical axis of the probe will vary from probe to probe (in other words, the mechanical axis of a probe, is probe specific). As explained in more detail below, typically, the mechanical axis of a probe is defined with respect to the probe's coordinate system. In the case the probe is mounted on an articulated head, the probe's coordinate system rotates with the probe as it rotates about the at least one axis. In the case of the probe being mounted on an articulated mechanism (head) having two perpendicular axes of rotation, the X-axis of the probe's coordinate system can be aligned with one of the axes of the head (e.g. the E axis - referred to below) and the Z-axis of the probe's coordinate system can be aligned with the other of the axes (e.g. the D axis - referred to below). The Y axis completes a right-handed rectangular system, and for an axial probe, the mechanical axis can be defined as the Z-axis (i.e. $[0\ 0\ 1]^T$) of the probe coordinate system. For a crank-angled version of the probe, the mechanical axis is a specified constant Euler rotation from this Z-axis column vector.

The at least one calibration parameter can be indicative of the ultrasound probe's longitudinal wave axis.

The at least one parameter can be stored in an electronic memory device.

According to another aspect of the invention, there is provided a method of inspecting an object with an ultrasound probe mounted on an inspection apparatus, the method comprising: taking a calibration parameter indicative of at least one axis of optimum signal of the ultrasound probe; determining how to relatively orient the ultrasound probe and object based on the calibration parameter, and controlling the motion of the inspection apparatus so as to bring the ultrasound probe into engagement with the object, in accordance with the determined orientation, and to obtain an ultrasound measurement of the object using the ultrasound probe.

The at least one parameter can be indicative of at least one of the ultrasound probe's longitudinal wave axis. Taking the parameter can comprise retrieving it from an electronic memory device.

As described above in connection with the first aspect of the invention, the method could then comprise performing a search (e.g. a "discovery-mode search") for an even more optimum signal. Techniques and configurations described above in connection with the above described aspects of the invention are equally applicable here, and vice versa. For example, the position of the ultrasound probe's coupling element on the surface of the calibration artefact can be substantially the same for each of the plurality of different relative orientations. For example, the search could comprise controlling the ultrasound probe and/or object so as to obtain measurements/signals with the probe and artefact at different rotational relative orientations about two (for example imaginary) (for example perpendicular) axes which extend through and perpendicular to the surface normal of the artefact at the point of contact between the ultrasound probe and artefact. For example, the method can comprise changing the orientation of the ultrasound probe relative to the artefact (e.g. moving/rolling the ultrasound probe) about two (e.g. imaginary) (e.g. perpendicular) axes which extend through the point of contact between the probe and artefact, and perpendicular to the surface normal of the artefact at the point of contact between the ultrasound probe and artefact. This can enable data (e.g. pulse-echo or backwall energy information) in more than one dimension (with respect to the probe) to be obtained. Also, for instance, the search could comprise moving the ultrasound probe so as to perform a plurality of orbital motions, e.g. centred about the optimum axis, and analysing the signals received.

There is also described herein a method of inspecting an object with an ultrasound probe mounted on an inspection apparatus, the method comprising, obtaining, for a single point of engagement between the ultrasound probe and object, at least one ultrasound (for instance backwall energy) measurement/signal at each of a plurality of different orientations between the ultrasound probe and object, so as to obtain information relating to ultrasound measurements/signals obtained at different orientations between the ultrasound probe and object.

Said information can comprise an array of information relating to ultrasound measurements/signals (e.g. back-wall energy). The array can comprise a plurality of bins/elements, and the method can comprise allocating the measurement/signal obtained at a particular orientation to a particular bin/element. Optionally, each bin/element corresponds to a particular angular orientation of the ultrasound probe and object. The method can comprise obtaining multiple ultrasound measurements/signals at each of a plurality of different orientations between the ultrasound probe and object. Optionally, a bin/element comprises a value which is the result of more than one measurement/signal. Optionally, a bin/element comprises an averaged signal/measurement (e.g. of backwall energy). The method can further comprise displaying the data obtained in the array.

The method can further comprise analysing the information (e.g. the data contained in the array) to determine information about the object, for example about the backwall of the object, for instance about the form of the backwall. Accordingly, the method can comprise analysing the data contained in the array to determine the orientation and/or shape of the backwall. Such analysis can be performed automatically.

The method can comprise analysing the information (e.g. the data contained in the array) to determine information about the material of the object, such as its elastic properties. For example, the method can comprise analysing the information (e.g. the data contained in the array) to identify more than one peak in the array. For instance, the method can comprise analysing the information (e.g. the data contained in the array) to determine information about received L-waves and S-waves, such as the ratio of the of the L-wave to S-wave speeds within the material (e.g. without any thickness measurement or time-delay estimation being performed).

The array could comprise a 1D array. Optionally, the array comprises a 2D array. For example, the array could comprise a 3D array. The array could be described as a series, or a map. For example, the array could be described as a backwall energy array/series/map, in particular a backwall energy distribution array/series/map. The array could comprise a coordinate map, for example a polar coordinate map. Optionally, the array comprises a look-up table or other appropriate data record.

As will be understood, the above described techniques and configurations in connection with the above described aspects of the invention are also applicable to this aspect of the invention too, and vice versa. For example, the position of the ultrasound probe's coupling element on the surface of the calibration artefact can be substantially the same for each of the plurality of different relative orientations.

Different relative orientations between the ultrasound probe and the calibration artefact can mean different "elevation angles" (or different "lean angles"/"angles of attack"/"angle of incidence") of the ultrasound probe (with respect to the calibration artefact's surface normal). In other words, different relative orientations of the ultrasound probe and calibration artefact could mean different angles between the ultrasound probe's axis (e.g. it's mechanical axis and/or ultrasound axis, for instance L-wave axis) and the surface normal of the calibration artefact. Different relative orientations between the ultrasound probe and the calibration artefact can mean different "azimuth angles" or different "directions of attack" of the probe (and does not necessarily result in a change in the "elevation angle") (with respect to the calibration artefact's surface normal). Optionally, different relative orientations between the ultrasound probe and the calibration artefact mean different "elevation" and "azimuth" angles of the ultrasound probe relative to the surface of the artefact.

Accordingly, the plurality of different orientations can be configured such that ultrasound measurements are obtained with the probe and artefact at different rotational relative orientations about two (for example imaginary) (for example perpendicular) axes which extend through and perpendicular to the surface normal of the artefact at the point of contact between the ultrasound probe and artefact. For example, the method can comprise changing the orientation of the ultrasound probe relative to the artefact (e.g. moving/rolling the ultrasound probe) about two (e.g. imaginary) (e.g. perpendicular) axes which extend through the point of contact between the probe and artefact, and perpendicular to the surface normal of the artefact at the point of contact between the ultrasound probe and artefact. This can enable data (e.g. pulse-echo or backwall energy information) in more than one dimension (with respect to the probe) to be obtained. Accordingly, information about the axis of optimum signal can be determined for more than one degree of freedom/dimension with respect to the ultrasound probe.

As explained in more detail below, the positioning apparatus can comprise at least one axis, for example at least two axes, about which the relative orientation of the ultrasound probe and calibration artefact can be changed. The method can comprise: for a plurality of different relative orientations between the ultrasound probe and the calibration artefact about at least one axis (for example about at least one of the at least two axes), measuring the signal received by the ultrasound probe. Accordingly, the method can comprise: for a plurality of different relative orientations between the ultrasound probe and the calibration artefact about at least two of the at least two axes, measuring the signal received by the ultrasound probe. In other words, the positioning apparatus can comprise at least a first and optionally at least a second axis about which the relative orientation of the ultrasound probe and calibration artefact can be changed. The method can comprise the ultrasound probe obtaining signals at a plurality of different combinations of angular orientations of the first and second axes. Accordingly, the method can comprise changing the relative orientation about the first axis, and optionally also changing the relative orientation about the second axis (between measurements). This can enable data (e.g. pulse-echo or backwall energy information) in more than one dimension (with respect to the probe) to be obtained.

According to another aspect of the invention, there is provided an apparatus comprising an ultrasound probe mounted on a positioning apparatus, in which the positioning apparatus comprises a controller configured with computer program code comprising instructions configured to control the apparatus in accordance with any of the above described methods.

There is also described herein computer program code comprising instructions configured to control an inspection apparatus to perform any of the above described methods. There is also described herein computer program code comprising instructions configured to analyse signals/measurements from an ultrasound probe in accordance with any of the above described methods. For instance, there is also described herein computer program code comprising instructions configured to determine, from measurements obtained by an ultrasound probe at a plurality of different relative orientations between the ultrasound probe and a calibration artefact, at least one calibration parameter which is indicative of at least one axis of optimum signal of the ultrasound probe, and recording the at least one calibration parameter for subsequent use. For example, there is also described herein computer program code comprising instructions configured to take a record which comprises at least one parameter indicative of at least one axis of optimum signal of an ultrasound probe and based on said record, control a positioning apparatus on which the ultrasound probe is mounted to orient the ultrasound probe. For example, There is also described herein computer program code comprising instructions configured to take a parameter indicative of at least one axis of optimum signal of an ultrasound probe; determine how to relatively orient the ultrasound probe and object based on the parameter; and control the motion of a positioning apparatus on which the ultrasound probe is mounted so as to bring the ultrasound probe into engagement with the object, in accordance with the determined orientation. For example, there is also described herein computer program code comprising instructions configured to analyse information relating to ultrasound measurements obtained at different orientations between the ultrasound probe and object so as to determine information about the object, for instance to determine information about the backwall and/or material of the object. There is also described herein a computer readable medium comprising computer program code as described above.

Embodiments of the invention will now be described, by way of example only, with reference to the following drawings in which:

Figure 1 schematically illustrates the fundamental operating principles of an example ultrasound probe;

Figure 2 illustrates the principle of ultrasound thickness measurement;

Figure 3 illustrates an ultrasound probe mounted on a coordinate measuring machine (CMM);

Figure 4 illustrates the different mechanical parts of an ultrasound probe;

Figure 5 illustrates the different electrical modules of an ultrasound probe;

Figure 6 illustrates how the difference between assumed and calibrated L-wave axis of an ultrasound probe can affect the propagation of the L-wave in a part;

Figure 7 illustrates an example flow chart of a process for calibrating the ultrasound probe can be calibrated;

Figure 8 illustrates an orbital motion;

Figure 9 shows a set of cones illustrating a set of orbital motions, along with an associated 2D energy bin map;

Figure 10 shows the 2D energy bin map of Figure 9 in isolation;

Figure 11a shows a polar coordinate map of the backwall energy distribution for an uncalibrated probe;

Figure 11b shows a polar coordinate map of the backwall energy distribution for a calibrated probe, measured about the calibrated L-wave axis which is aligned to the surface normal of the calibration artefact;

Figures 12a to 12d illustrate how the ultrasound probe can be oriented so as to ensure that the L-wave axis is aligned with a target vector;

Figure 13a illustrates a part having a planar and parallel backwall, and Figure 13b illustrates the backwall energy distribution map obtained from a series of orbital scans (taken at a single point); and

Figure 14a illustrates a part having a planar but non-parallel backwall, and Figure 14b illustrates the backwall energy distribution map obtained from a series of orbital scans (taken at a single point).

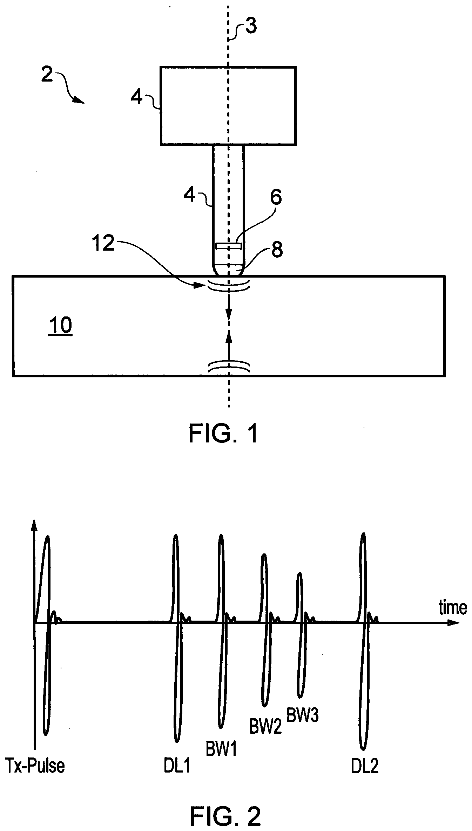

The fundamental operating principles of an example ultrasound probe will be explained with reference to Figures 1 and 2. Figure 1 shows an ultrasound probe 2 that comprises an outer body 4. A longitudinal wave ("L-wave") transducer is provided that comprises a piezoelectric element 6 and a deformable coupling element 8. As will be understood, other commonly employed components within the ultrasound probe, such as the backing layer and matching layer (wave-plate), can form part of the ultrasound probe, but which for simplicity are not shown in Figure 1. To measure the thickness of an object 10, the probe 2 and/or object 10 are moved so as to engage the deformable coupling element 8 and the front surface of the object 10. When an excitation pulse is applied across the piezoelectric element 6, an ultrasound beam 12 is projected into the object 10. As schematically illustrated, this ultrasound beam 12 is reflected by the back wall of the object, this reflected beam is sensed by the ultrasound probe (e.g. via the piezoelectric element 6). This process can be referred to as pulse-echo measurement, or more colloquially as "pinging". As will be understood, a thickness measurement estimation can be made using a time-of-flight or time-delay measurement of the projected ultrasound waveform.

Figure 2 is an example of the ultrasound waveform received by the transducer's active piezoelectric element 6 in response to a transient high voltage excitation pulse being applied across the piezoelectric element 6. This time-domain waveform, referred to as an "A-scan" plot, is more often a time averaged response from a train of such excitation pulses (e.g. a sequence of N pulses where N may be in the range of 16-32) in order to suppress random uncorrelated electronic noise.

The initial excitation pulse generated by the piezoelectric element 6 is labelled as the "Tx-Pulse" in Figure 2. This initial excitation pulse causes the inspection L-wave to propagate into the coupling element 8 (which acts as a delay line) and travel along at the speed of sound in the coupling element material ($C_L$). The first reflection peak (DL1) received back at the piezoelectric element 6 arises from reflection of sound from the interface between the coupling element 8 and the object 10. This reflection from the interface between the coupling element 8 and the object 10 (i.e. the DL1 echo) can be seen to occur at a time well after the initial transmit pulse (Tx-pulse) has completely receded.

Although some ultrasound is reflected back at the delay line interface and never enters the object 10, a sufficient proportion of ultrasound does transmit into the object 10 as a measurable inspection pulse from which subsequent thickness measurements can be made. The speed of sound in the deformable coupling element 8 can be low compared to the speed of sound within the object 10, and so especially if the object is relatively thin, multiple reflections between the back wall of the part 10 can occur before a second reflection peak (DL2) from the delay line/coupling element 8 is registered at the transducer. These backwall reflections thus provide the pulses BW1, BW2, and BW3 that can also be seen in the "A-scan" plot of Figure 2. The time window observed within the A-scan between the first and second delay line reflection peak (DL1 and DL2) is thus the probe's primary measurement window.

The thickness of the object 10 may be calculated from A-scan data of the type shown in Figure 2 in several ways. In practice, such thickness measurements typically involve one of three modes of operation from which the time delay information can be extracted from the measured A-scan. These different modes are typically termed Mode-1, Mode-2 and Mode-3 respectively. In Mode-1 gauging, the time delay measurement is made between the excitation pulse (t=0) and the first back-wall reflection or primary echo from the object 10. In Mode-2 gauging, the time delay measurement is made between an interface echo representing the near surface of the test part and the first back wall reflection. In Mode-3 gauging, the time delay measurement is made between two or more successive back wall reflections. Mode-3 is most effective where clean high SNR multiple back wall echoes can be observed, suggesting it is most practical in low attenuation high acoustic impedance parts such as fine-grain metals, glass or ceramics. Mode-3 also has the advantage that it does not rely on the absolute time of arrival of back wall or delay line reflections, thus negating the effects of variability in the coupling and delay lines of different coupling modules. Mode-3 also allows parts to be measured that comprise outer coating layers. Any suitable mode (e.g. Mode-1, Mode-2 or Mode-3) could be used as necessary. As will be understood, the below described calibration technique extracts signal information from the measurement window, but does not necessarily involve performing a thickness measurement (e.g. a calculation of thickness). Although the calibration can typically extract information from the primary measurement window (e.g. between DL1 and DL2), the method can also apply when signal/echo information is extracted from subsequent measurement windows (e.g. between DL2 and a third delay line reflection peak "DL3" - not shown in Figure 2) or from any combination of measurement windows.

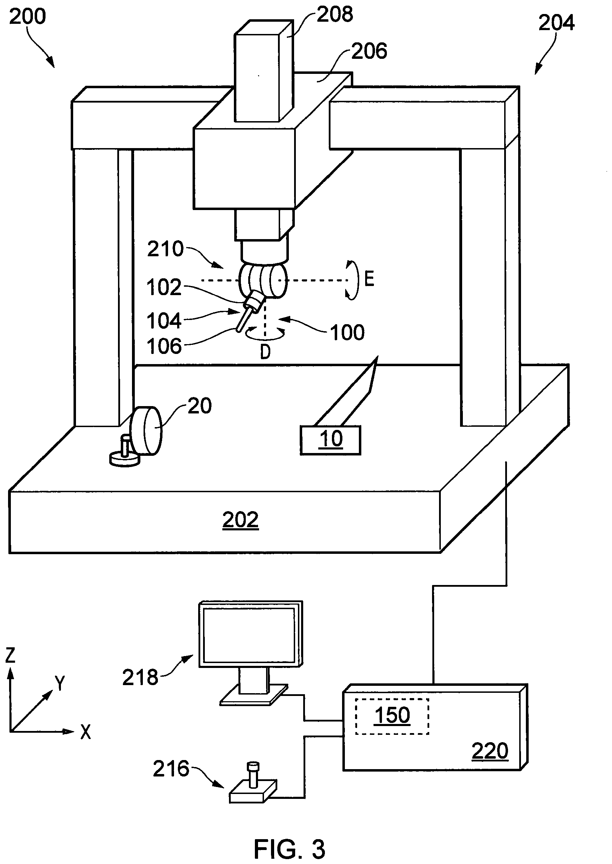

With reference to Figure 3 there is shown an ultrasound probe 100 mounted on a positioning apparatus 200. The positioning apparatus comprises a movement structure, in this case in the form of a coordinate measuring machine ("CMM"). The CMM 200 comprises a base 202, supporting a frame 204 which in turn holds a carriage 206 which in turn holds a quill 208 (or "Z-column"). Motors (not shown) are provided to move the quill 208 along the three mutually orthogonal axes X, Y and Z (e.g. by moving the frame along the Y axis, and the carriage 206 along the X axis, and the quill 208 along the Z-axis).

The quill 208 holds an articulated head 210, which could be an indexing head or a continuous head, but preferably is a continuous head (e.g. a REVO® head available from Renishaw plc). As will be understood, a continuous head enables orientation of a device mounted on it at substantially any angle about at least one axis and are often described as providing a near infinite number of angular orientations. Also, if desired, the orientation of the measurement device about an axis of a continuous head can be changed during measurement (e.g. whilst a contact probe is in contact with an object being inspected and acquiring measurement information). In contrast, an indexing head has a discrete number of defined ("indexed") positions at which the measurement device mounted on it can be locked. With an indexing head, the orientation of the measurement device can be changed, but not during the acquisition of measurement data.

In this embodiment, the articulated head 210 facilitates rotation of the probe 100 mounted on it, about first and second rotational axes D, E via appropriate bearings and motors (not shown).

The combination of the two rotational axes (D, E) provided by the articulated head 210 and the three linear (X, Y, Z) axes of translation of the CMM 200 allows the probe 100 to be moved/positioned in five degrees of freedom (two rotational degrees of freedom, and three linear degrees of freedom).

Further, although not shown, measurement encoders may be provided for measuring the relative positions of the base 202, frame 204, carriage 206, quill 208 and the parts of the articulated head 210 so that the position of the measurement probe 100 relative to a workpiece 10 located on the base 202 can be determined.

A controller 220 is provided for controlling the operation of the CMM 200, such as controlling the position and orientation of the ultrasound probe within the CMM volume (either manually, e.g. via an input device such as joystick 216, or automatically, e.g. under the control of an inspection program) and for receiving information (e.g. measurement information) from the CMM 200. A display device 218 can be provided for aiding user interaction with the controller 220. The controller 220 could, for example, be a dedicated electronic control system and/or may comprise a personal computer.

As shown, a probe interface 150 (for facilitating communication with the probe 100) can be provided in the controller 320, for example.

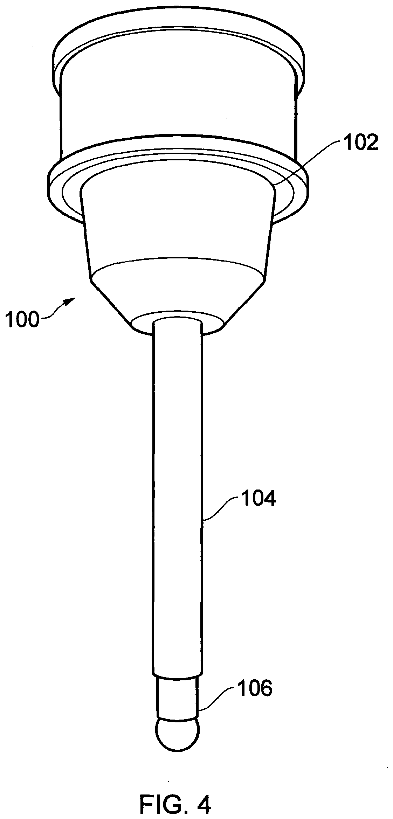

The present invention is suitable for use with a range of different types of ultrasound probe. WO2016/051147 and WO2016/051148 describe various types of ultrasound probe which the invention can be used with. For the sake of illustration, one particular type of ultrasound probe 100 will now be described in more detail in connection with Figure 4. The ultrasound probe 100 shown in Figure 4 is arranged for attachment to a two-axis rotary head. It would, of course, be possible to attach such an ultrasound probe to other positioning/measurement systems, for example a robot arm.

The ultrasound probe 100 comprises a base module that includes a main body portion 102, which is provided at the proximal end of the probe 100 that attaches to the CMM. The main body 102 can contain electronics required to power the probe and communicate control data and activation commands to the probe (e.g. to schedule ultrasonic measurements). Power and/or control data, including ultrasonic data and thickness measurement results, may be passed through the rotary head communication channels and/or wirelessly. Rather than power being provided via the CMM, power could be provided by a battery located in the main body portion 102, for example.

An elongate tube 104 (e.g. a rigid carbon-fibre tube) extends from the main body 102, along the probe's axial length. A coupling element 106, in particular a deformable coupling element, is located at the end of the tube 104 distal the main body 102. In the embodiment described, the deformable coupling element 106 comprises a hydrophilic elastomer. Optionally, the deformable coupling element 106 is replaceable (e.g. could be attached via a screw or snap-fit). At least the portion of the coupling element 106 which protrudes from the tube 104 is spherical. As will be understood, the deformable coupling element may engage a wear plate of the transducer in the probe, and the deformable coupling element 106 may act as both the coupling element and a delay line. The deformable coupling element 106 can be soft and elastic so as to easily conform to the surface of the object 10 it engages.

In use, the ultrasound probe 100 is moved by the CMM 200 so as to bring the deformable coupling element 106 into contact with the object 10 to be inspected, thereby forming an acoustic coupling with the object. The ultrasound probe 100 generates ultrasound waves (for example, via a piezo-electric element) which are imparted into the object 10, and reflected by the back wall of the object 10. The reflected ultrasound waves are sensed by the ultrasound probe, and analysed to determine the distance of the back wall from the front wall of the object 10 (i.e. to determine the thickness of the object 10).

The ultrasound inspection apparatus may excite and receive ultrasound in any known way. The ultrasound inspection apparatus may operate at a high frequency. For example, the operating frequency may be greater than 5MHz, greater than 10MHz or more preferably greater than 15MHZ. In a preferred embodiment, the operating frequency is around 20MHz. The transducer, which may comprise a piezoelectric element, preferably excites longitudinal sounds waves (L-waves).

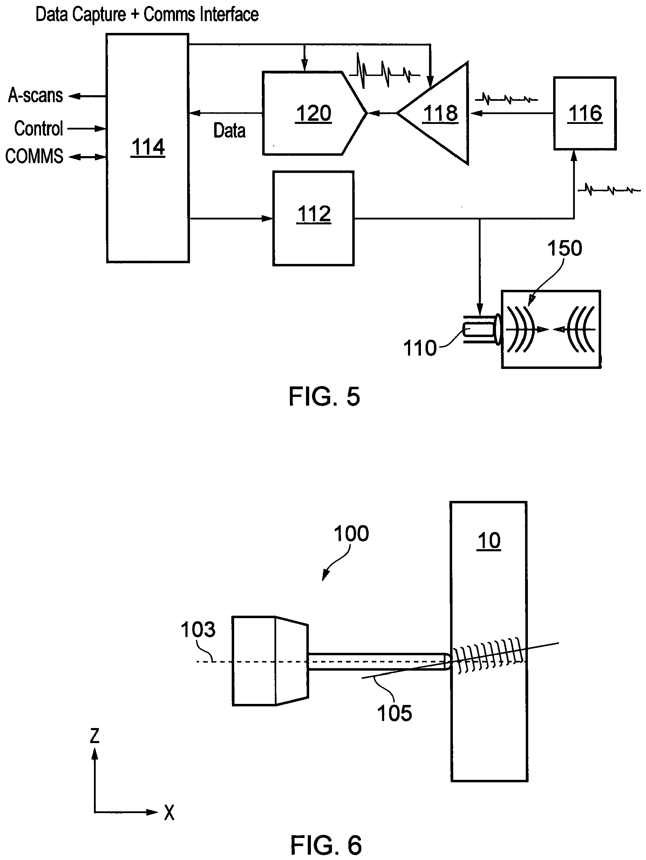

Figure 5 schematically illustrates an example embodiment of the analogue and digital electronic modules that can be provided with (e.g. within) the ultrasonic probe 100. As schematically shown, the ultrasound probe comprises an ultrasound transducer 110, for example a pulse-echo ultrasonic transducer that includes a piezo-electric element for transmitting high frequency time-discrete longitudinal waveforms (hereinafter termed "L-waves"), when driven by a train of high-voltage impulsive excitation pulses; e.g. negative going transition (NGT) pulses between 50-150V and of duration 1/2f.

An analogue "pulser" circuit 112 is provided that is capable of generating the repeated trains of high voltage (50-150V) a.c. analogue signals (e.g. NGT pulses). Although the pulser 112 is provided, a more sophisticated digital waveform synthesizer could alternatively be employed to generate frequency or amplitude modulated waveforms to drive the piezo in more attenuating environments. The high voltage pulses generated by the pulser 112 effectively drive the piezoelectric active element 110 within the transducer of the probe to output the required ultrasonic waveforms 150, but without exceeding the maximum voltage for such a thin fragile piezoelectric element. Each pulse activation may be instigated and precisely controlled in time by an enable signal sent to the "pulser" circuitry 112 from an FPGA 114 or equivalent processor. For every activation, a fast T/R switch 116 allows the device to instantaneously switch between the transmit mode and the longer duration receive mode during which time the system acquires and digitally records the acoustic response to the transmitted pulse measured by the reciprocal piezoelectric element 112.

It might be that the amplitude level of the received signals of interest can vary significantly. Accordingly, to try to deal with this a variable gain amplifier (VGA) 118 could optionally be provided to induce gain across the acquired A-scan response in order to amplify the signal prior to digital acquisition. Moreover, to equalise the variability within each A-scan response due to propagation loss or attenuation with some materials, a form of automatic gain control (AGC) known as distance-amplitude correction (DAC) may also be implemented. The amplified A-scan is then digitized using a suitably wide dynamic range (e.g. 12 bit) analogue-to-digital converter (ADC) 120 where sufficient over-sampling above the Nyquist rate is provided as the sample rate fundamentally effects the temporal resolution of the measurement system and thus the accuracy of the thickness measurement; e.g. a sampling rate of 125MHz or higher may be suitable for a 20MHz transducer. The encoded digital waveforms from the ADC 120 may also require band pass filtering using a digital filter, for example a low order FIR with a pass band matching the operating frequency of the transducer. The Tx-Rx electronics are designed so as to minimise all possible sources of electronic noise that may be observed within each individual A-scan. Such uncorrelated noise is most effectively suppressed by averaging across N successive repeated A-scan measurements (i.e. providing a theoretical $\sqrt{N}$ SNR gain). As will be understood, averaging is not necessarily conducted during the below described calibration method.

The ultrasound transducer 110 (e.g. a piezo-electric element) is preferably (although not necessarily) located toward the distal end of the tube 104 (i.e. at the end near the deformable contact element 106). The other electronics can be located anywhere within the probe, for example in the main body portion 102. Optionally, at least some of the other electronics could be located outside the probe, for example at least partially in the controller 220.

As will be understood, ultrasound probe can have a mechanical axis 103 as well as an ultrasound axis 105 (see Fig. 6).

What the mechanical axis is will depend on the probe design. Typically, the mechanical axis of a probe is defined with respect to the probe's coordinate system. In this case, the probe is mounted on an articulated head, and the probe's coordinate system rotates with the probe as the probe rotates about an axis of the articulated head. In the case of the probe being mounted on an articulated head having two perpendicular axes of rotation, the X-axis of the probe's coordinate system can be aligned with one of the axes of the head (e.g. the E axis - illustrated in Figure 3) and the Z-axis of the probe's coordinate system can be aligned with the other of the axes (e.g. the D axis - illustrated in Figure 3). The Y axis completes a right-handed rectangular system, and for an axial probe, the mechanical axis is defined as the Z-axis (e.g. $[0\ 0\ 1]^T$) of the probe coordinate system. For a crank-angled version of the probe, the mechanical axis is a specified constant Euler rotation from this Z-axis column vector. The ultrasound axis is defined as the direction in which the ultrasound travels in the probe coordinate system. It is a fixed vector within the probe's coordinate system, and so like the mechanical axis, it rotates with the probe as the probe rotates about an axis of the articulated head.

As schematically illustrated by Figure 1, it could be assumed that the L-wave axis is aligned with the mechanical axis 3 of the probe 2, and therefore if the ultrasound probe engages the object with the mechanical axis normal to the front surface of object, then the L-wave axis will be projected into the part normal to the front surface of the object. Accordingly, if the probe's ultrasound axis is defined as a unit column vector $v_{ua}$, fixed in probe coordinates, in an ideal situation where the probe's ultrasound axis is aligned with the probe's mechanical axis, $v_{ua}$ will be $[0\ 0\ 1]^T$.

However, the inventors have identified that it is very difficult to manufacture an ultrasound probe with the L-wave axis being perfectly aligned with the mechanical axis of the probe. Rather, it is more than likely that the L-wave axis will be slightly misaligned with the mechanical axis of the probe (e.g. by up to 2 to 3 degrees). Causes of misalignment include mechanical misalignment between the shaft and/or body and the transducer, and/or acoustic misalignment (e.g. where the ultrasound beam might not be perfectly symmetrical). Figure 6, schematically illustrates such a misalignment between the assumed L-wave axis (which is assumed to the same as the mechanical axis 103 shown in dotted-line) and calibrated L-wave axis 105 (shown in solid-line).

The inventors have found that even when a small misalignment exists between the assumed and calibrated L-wave axes, the performance of the ultrasound probe apparatus is compromised. In particular, it has been found that the accuracy of measurements obtained from the ultrasound probe apparatus can be adversely affected by misalignment between the assumed and calibrated L-wave axes. Such misalignment complicates, and diminishes the amplitude of, the backwall echo(es).

For example, the distance travelled by the most intense highest amplitude L-wave will be greater than if the mechanical and ultrasonic axes were perfectly aligned and it would be a lower amplitude part of the projected L-wavefront that takes the shortest path between the front and back-walls. This will result in lower amplitude and potentially dispersed back-wall echoes from which the thickness measurement is derived using signal processing algorithms that estimate the time-of-arrival or time-difference of arrival of these back-wall echoes and this can significantly degrade measurement accuracy in such a high precision thickness measurement system (e.g. within 10 microns).

This problem is compounded due to refraction. That is, if the L-wave does not enter the object normal to the surface, then it will be refracted from the normal in accordance with Snells Law, the degree of refraction being dependent on the angle of incidence and the speed of sound within the deformable coupling element and the inspection object.

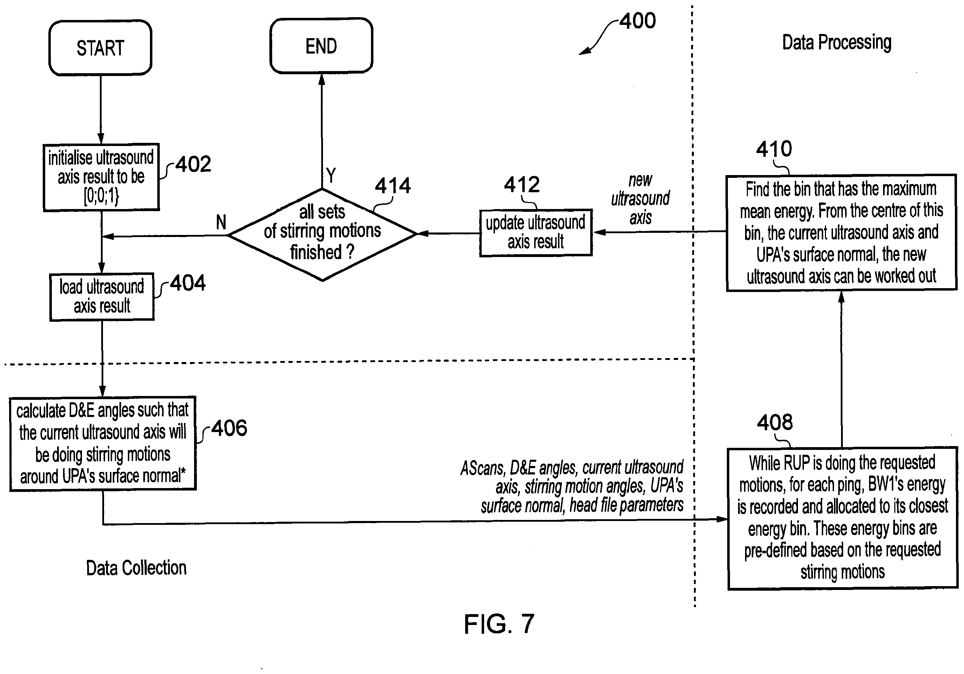

The inventors have found that such problems associated with misalignment between the mechanical/assumed axis and the calibrated L-wave axis can be significantly reduced by calibrating the ultrasound probe so as to find the L-wave axis. A method 400 of calibrating the ultrasound probe 100 in accordance with one example embodiment of the present invention will now be described with reference to the flow chart shown in Figure 7.

In summary, the calibration process involves loading the ultrasound probe onto a known-geometry calibration artefact 20 (e.g. a metallic object having front and back walls of a known arrangement; such as them being planar and parallel) and performing a plurality of orbital motions around the surface normal of the calibration artefact whilst taking repeated pulse echo measurements ("pinging") at a high rate to obtain an angular distribution of reflected backwall signal strength information that indicates misalignment between the ultrasound and mechanical axes. In this particular embodiment described, two sets of orbital motions are performed; a first set for coarse measurement, and a second set for finer measurement (as explained in more detail below). Accordingly, in the embodiment described two iterations of the process shown in Figure 7 take place. However, as will be understood this need not necessarily be the case and only one (or more than two) iterations could take place. Furthermore, as will be understood, searching motions other than orbital motions could be performed.

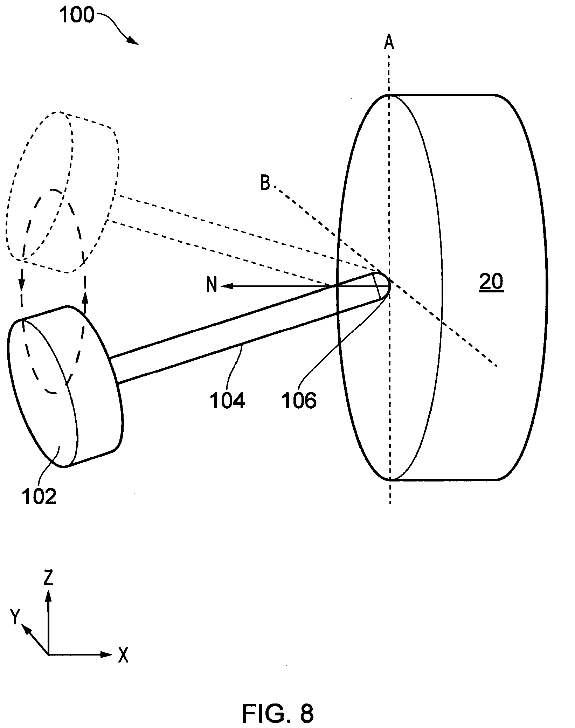

Turning briefly to Figure 8, this schematically illustrates an example path the ultrasound probe 100 might be caused to take during an orbital motion. The extent of the orbital motion has been exaggerated for the sake of illustration. Also, the articulated head 210 has been omitted for ease of illustration. As shown, the ultrasound probe is controlled in a way which ensures that the coupling element 106 remains stationary on a single point the calibration artefact, whilst the main body 102 (and hence the current ultrasound axis) is moved about in a circle about the calibration artefact's surface normal N. Such control could be achieved from knowledge of the length of the ultrasound probe, e.g. from prior calibration, and by achieving a known deflection of the deformable coupling element 106. As shown, a motion causes the tip (i.e. the coupling element) of the ultrasound probe to be rolled about two imaginary perpendicular axes A, B which extend perpendicular to surface normal N at the point of interaction between the ultrasound probe and the calibration artefact 20. This enables data (e.g. pulse-echo or backwall energy information) in more than one dimension (with respect to the probe) to be obtained. Accordingly, information about the L-wave axis can be determined for more than one degree of freedom/dimension with respect to the ultrasound probe. As will be understood, synchronous rotation about the D and E axes (in a back-and-forth manner), as well as movement of the articulated head in the Z and Y axes (so that it is driven in a circular manner) will be required to effect such an orbital motion.

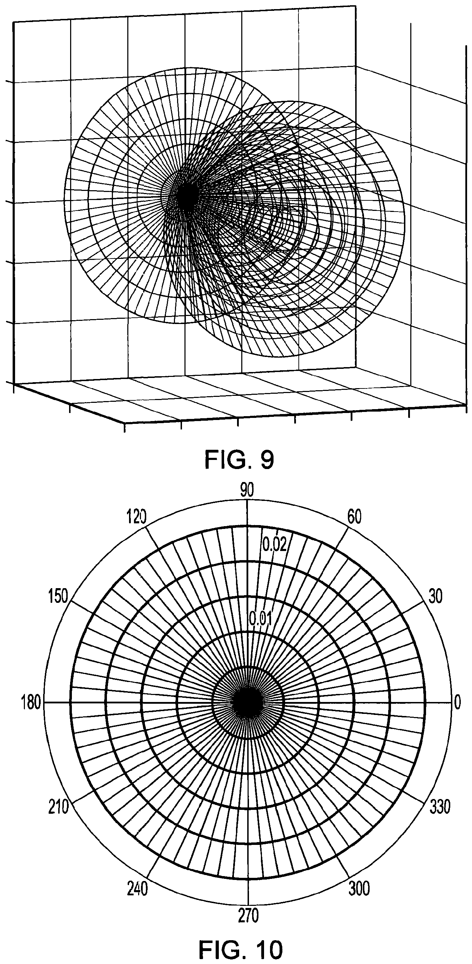

In the embodiment described, each set of orbital motions effectively forms a set of conical shapes. Figure 9 shows one set of cones (five) around a vector (shown as a black arrow) which represents the surface normal.

These two sets of cones essentially can be described as two sets of angles (between the surface normal and each cone). Table 1 below shows example angles that could be used:

*Table 1 - Angles that define conical shapes*

| Set # | Angle range | Angle step | Number of different angles | Angles |
|---|---|---|---|---|
| 1 | 0° to 1.25° | 0.25° | 6 | 0°, 0.25°, 0.50°, 0.75°, 1.00°, 1.25° |
| 2 | 0° to 0.4° | 0.04° | 11 | 0°, 0.04°, 0.08°, 0.12°, 0.16°, 0.20°, 0.24°, 0.28°, 0.32°, 0.36°, 0.40° |

Although not explicitly shown in the flow chart of Figure 7, as will be understood, the method could comprise obtaining data about the front and back walls of the calibration artefact. For example, the method could comprise measuring the position and orientation of the front wall of the calibration artefact 20, e.g. with a position measurement probe, for example a touch-trigger probe. This so that the calibration artefact's surface normal can be established, and so that the motions/orbits of the probe in the CMM coordinate system can be defined. In Figure 7, the calibration artefact is referred to as "UPA" and the ultrasound probe is referred to as "RUP". If it can be assumed that the backwall is planar and parallel to the front wall, then it is not necessary to check this by measurement. If such an assumption cannot be made, then the method can comprise also measuring the backwall of the calibration artefact.

At the start of an ultrasound axis calibration, at step 402, the ultrasound axis result $v_{ua}$ is initialised to be [0 0 1]$^T$, and this is loaded into the controller at step 404. Accordingly, on the first iteration, $v_{ua}$ is set as if there is no misalignment, and (as explained in more detail below) on the second interaction, $v_{ua}$ is updated from the result of the first iteration to adjust for misalignment found during the first iteration.

Step 406 comprises determining how to control the CMM, in order to perform the orbital motions. This involves determining the D and E articulated head angles. As will be understood, the steps in an orbital motion can be defined with respect to a vector $v_{cmm}$ in CMM coordinates, and so the D and E articulated head angles need to be calculated so as to realise this vector (such that $v_{ua}$ is aligned to $v_{cmm}$). These D and E angles are then passed to the controller such that the controller can control the orientation of the ultrasound probe accordingly.

Whilst the ultrasound probe is carrying out an orbital motion, for each pulse-echo measurement (or "ping"), the A-scan and the D and E angles are recorded at step 408. At step 410, the data recorded from a set of orbital motions is processed, as described in more detail below, so as to determine a new $v_{ua}$. Thereafter, at step 412, $v_{ua}$ will get updated. At step 414 it is determined whether or not to repeat this process. In this case, the process is repeated because so far only the coarse measurements have been performed, and a second set of finer measurements are to be obtained.

Having two sets of orbital motions with different resolutions means that the ultrasound (e.g. L-wave) axis can be identified quickly and coarsely during the first set of motions, and then a much finer search around the result determined after the first set of motions, can be performed during the second set of motions. By doing so, a balance between calibration time and accuracy is well maintained. However, as will be understood, this does not necessarily have to be the case, and just one set of motions could be performed. As will also be understood, a search motion (e.g. orbital motion) can be interrupted before its completion if the local peak of interest has been found before the defined search path motion has completed.

As indicated above, the processing of the data at step 410 can happen in parallel while the ultrasound probe is "pinging" and performing the orbital motions.

However, as will be understood this need not necessarily be the case, and for instance could be done after all of the orbital motions in a set have finished, for example.

In the embodiment described, for recording and processing purposes, energy bins with respect to the calibration artefact's front surface are defined/used. Figure 10 schematically illustrates energy bins for the first set of orbital motions. Each spoke is 5° (this value is fixed across all sets of orbital motions) apart from its adjacent spokes, making the total number of spokes 72. Each circle is generated from radius as the sine value of the angles listed in the first row, last column in Table 1. In this embodiment, the energy bin map is a 2D map and the backwall energy for the D and E angles are projected into the 2D map as described below. However, as will be understood, this need not necessarily by the case. For example, a 3D energy bin map could be used.

At step 408, for each ping, the backwall energy is recorded and allocated to its closest energy bin, the process for which is explained in more detail in the following few paragraphs. In order to reduce susceptibility to noise, each orbital motion can be performed a number of times, with multiple results being stored in each bin and therefore each bin can represent a mean energy value. Also, the number of measurements used to get the result in each bin can be saved, such information being used to calculate the current updated averaged energy. Defining the resolution of the polar coordinate grid allows a discrete energy distribution map to be determined. However, as will be understood, the resolution of this map could be increased/improved after the empirically complied map has been populated using any well-established interpolation methods. It is also noted that noise that could be present within the measured distribution could be reduced or removed via post-process filtering or smoothing, thus potentially improving the reliability or accuracy of the extracted energy peak.

Extracting the backwall energy for each ping can comprise extracting any suitable signal strength/quality indicator. Accordingly, extracting the backwall energy for each ping can comprise extracting any suitable signal amplitude or integrated signal energy measure from the raw ultrasound A-scan signal measurement. For example, within the time-interval of each A-scan known as the measurement window, one or more multiple time-discrete echoes from the calibration artefact's backwall will be observed. Any signal metric related to the amplitude, the duration, the time-of arrival or the time-integrated energy of one or any time-gated combination of the present backwall echoes can be used. For example, the peak amplitude of the envelope of the first highest amplitude backwall echo can be extracted using the Hilbert transform or any other suitable demodulation technique, such as square-law detector, or Teager-Kaiser energy operation. This peak could be defined as the chosen energy metric of the A-scan at the D and E angles the ping occurred (which are reported by the controller). Using the recorded D and E angles, a vector $V_{cmm}$ (which is the vector of the direction that the ultrasound travels in the CMM coordinates) is then calculated, for example by a transformation such as that shown in equation 1.

$$v_{cmm} = R \times v_{ua} \qquad (1)$$

Where R is a 3 by 3 rotation matrix, and where and $v_{ua}$ is the current ultrasound axis result, which is a column vector in probe coordinates.

Currently, the vector $v_{cmm}$ is a vector in 3D coordinates, and therefore $v_{cmm}$ is then projected onto a plane (e.g. the calibration artefact's front surface) defined by the calibration artefact's surface normal $v_{sn}$. A polar coordinate system on that plane is thereby defined. The pole is defined as the point where the cones intersect the plane. The polar axis $v_{polar}$ is defined as the projection of the first $v_{cmm}$ onto the plane. Each $v_{cmm}$'s projection point will be allocated to its nearest energy bin. In other words, the $V_{cmm}$ projection point is the point at which the $V_{cmm}$ vector intersects the plane. The closest energy bin to that projection point will be identified and the averaged energy in that bin will get updated.

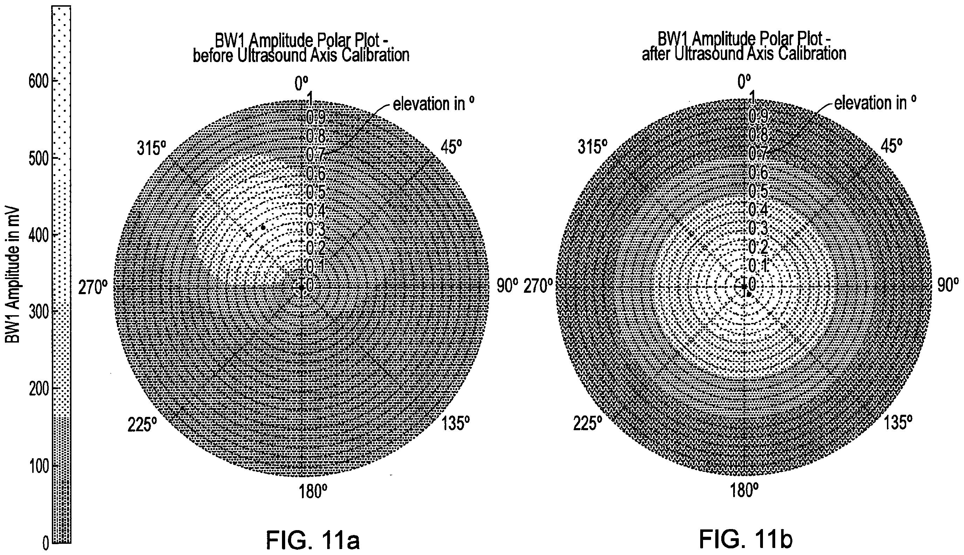

Figure 11a schematically illustrates an example back-wall energy distribution for an ultrasound probe 100 after a set of orbital motions has completed. As can be seen, for an uncalibrated probe, the highest averaged energy is not symmetrical, which is representative of the misalignment of the mechanical and L-wave axes. The map of Figure 11a is to be contrasted with the map of Figure 11b which has been obtained for a calibrated probe (and for which the orbital motions took place about the calibrated L-wave axis). As will be understood, the calibrated map distribution of Figure 11b would be obtained from the calibrated probe with the artefact positioned at any location and orientation within the CMM volume. In the embodiment described, the backwall energy distribution comprises a 2D map, defined with respect to the front surface of the calibration artefact. As will be understood, this need not necessarily be the case, and for instance the energy bins could be defined in a 3D space.

After each set of orbital motion is finished, the energy bin which has the highest averaged energy will be identified. For example, i.e. its azimuth $\varphi_{max}$ and radius $r_{max}$ are identified. Then it will be translated from 2D to 3D and the result is a vector in CMM coordinates ($V_{max}$), representing the vector that gives the highest energy. Accordingly, once transformed, $v_{max}$, which is a vector in CMM coordinates, gives you the maximum energy. This itself then needs to be transformed into probe coordinates. Accordingly, the D and E angles are calculated, such that $v_{ua}$ is aligned to $v_{max}$. Next, based on the D and E angles, the rotation matrix $R^T$ from CMM coordinates to probe coordinates, is calculated. Then the updated ultrasound axis result $v_{ua\_new}$ (in probe coordinates) is calculated such that:

$$v_{ua\_new} = R^T \times v_{sn} \qquad (2)$$

Therefore, $v_{ua}$'s x and y components are now non-zero. In this case the angle between $v_{ua}$ and $[0\ 0\ 1]^T$ quantifies how misaligned the probe is, while its x and y components indicate the direction of misalignment. Accordingly $v_{ua}$ provides a definition of the calibrated axis of the L-wave, in the probe's coordinate system.

If the ultrasound probe's L-wave is perfectly in alignment with its assumed axis (e.g. the probe's mechanical axis) or if it has already been correctly calibrated (i.e. the current Vua is correct), $V_{max}$ will be the same as/very close to calibration artefact's surface normal. Otherwise, $V_{max}$ will deviate from the surface normal and based on these two vector values the current $V_{ua}$ can be updated so that it becomes a better representative ($V_{ua\_new}$) of the Ultrasound Axis (in probe coordinates).

Accordingly, in summary, the above process enables the calibrated axis of the L-wave to be determined by changing the relative orientation of the ultrasound probe and the calibration artefact, and analysing the backwall energy received at the different angular orientations. In the above embodiment, the ultrasound probe is moved in a circular, orbital fashion, which is repeated at a plurality of different angles with respect to the surface normal. However, as will be understood, this need not necessarily be the case, and other (for example iterative) processes for obtaining data on the backwall energy for different angular orientations can be used. As will be understood, the search motions (i.e. the way in which the orientation of the probe is controlled) could follow any pattern and does not have to be circular/orbital motions. For instance, the ultrasound probe could be swung in a substantially back and forth manner (with the coupling element stationary on the calibration artefact) to achieve similar measurement data. Also, rather than the data being stored/presented in a 2D map, the data obtained during a search/calibration procedure could be stored/presented in other ways. For example, measurement data could be recorded in a 1D array/plot/time series. Further, optionally, averaging does not necessarily have to be performed. For example, the method could comprise performing an N-iteration search using the maximum in the backwall time series, ending up with a descending "step-pattern" in the time-series on the Nth iteration.

Also, in alternative embodiments, the ultrasound probe could be retracted from the surface of the calibration artefact, re-oriented and placed back on the surface of the calibration artefact to take another measurement. Further still, although it can be advantageous for the ultrasound probe's coupling element to be stationary/reengage the same point for each measurement, this need not necessarily be the case, so long as the relationship between the front and back wall of the calibration artefact is known and taken into consideration in the processing.

If desired, interpolation and/or smoothing of energy maps to estimate the required peak energy vector can be used in order to reduce the number of actual measurements taken, thereby improving the speed of the calibration process.

Knowledge of the calibrated axis of the L-wave of the ultrasound probe can be advantageous for a number of reasons. The calibrated probe will more consistently return optimal backwall echoes and improve signal to noise ratio which inherently improves thickness measurement accuracy. In other words, knowledge of the calibrated axis of the L-wave of the ultrasound probe enables the ultrasound probe to be oriented so as to obtain the cleanest signal. For instance, for a given point on an object to be inspected there can be a desired propagation vector for the L-waves to propagate along within the object, and therefrom a target inspection axis/vector may be determined. The target vector can be determined based on the assumed/known geometry of the part, including the part's material properties and, as explained in more detail below, taking into consideration Snells law so that any expected refraction of the L-wave as it enters the part can be compensated for. Once the target vector has been determined, it is possible, based on knowledge of the relationship between the ultrasound probe's L-wave and mechanical axes from the above mentioned calibration procedure, to calculate the D and E angles for the articulated head which will ensure that the L-waves propagate along the desired propagation vector within the object.

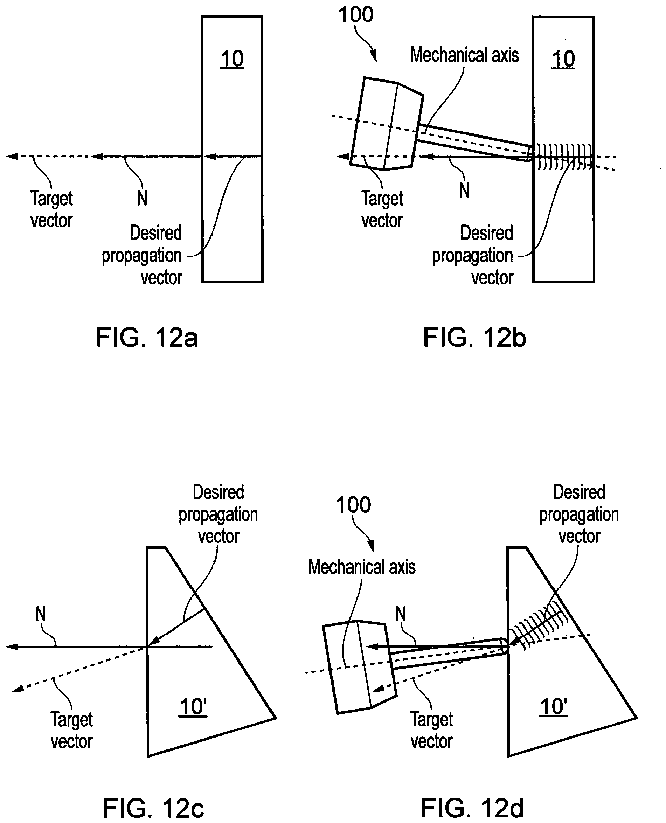

Taking the example shown in Figure 12a, for the desired propagation vector for the L-waves to propagate along within the object, a target vector is determined, which in this case is perpendicular to the front wall of the part being inspected. Accordingly, Figure 12b illustrates how that, based on knowledge of the relationship/misalignment between the ultrasound probe's L-wave and mechanical axes from the above mentioned calibration procedure, it is possible to determine how to orient the ultrasound probe in order to ensure that the L-waves propagate along the desired propagation vector within the object.

As mentioned above, calculation of the target vector may take into consideration the effects of refraction as the L-wave enters the workpiece. For instance, if as shown in Figure 12c, the desired propagation vector is not perpendicular to the front wall, then the effect of refraction needs to be taken into consideration when determining the desired target vector. As shown in Figure 12c, on the basis of Snells law, it is predicted that the ultrasound wave will refract away from the surface normal N as it enters the workpiece 10'. Accordingly, the Target vector is determined so as to take this into consideration. Then, based on knowledge of the L-wave axis from the above mentioned calibration procedure, the mechanical axis of the ultrasound probe is offset from the target vector to ensure that the L-waves propagate along the desired propagation vector within the object. Therefore, the calibrated probe will also allow improved measurement of wedge geometries, where incident probe vectors predicted by Snells law will agree more closely with empirical discovery mode measurements.

As will be understood, in the case of Figure 12b and also in the case of Figure 12d, the mechanical axis of the ultrasound probe is offset from the target vector in a way which means that the ultrasound probe's calibrated L-wave axis is aligned with the target vector. In the case of Figure 12b where there is no refraction, the L-waves propagate within the object along a vector that is aligned with the target vector (as illustrated). In the case of Figure 12d, the ultrasound probe's calibrated L-wave axis is aligned with the determined target vector, but due refraction (which was taken into consideration when determining the target vector), the L-waves will refract at the interface between the ultrasound probe's tip and the object, and therefore will propagate along the desired propagation vector within the object (which is not aligned with the target vector).

The inventors have found that even with a calibrated probe, it could be beneficial to search around the target vector to see if an even more optimum signal can be obtained. For example, it might be that the actual workpiece being inspected is not a perfect part, and/or accurately predicting or measuring the effect of refraction could be difficult. Accordingly, the inspection apparatus could be configured so as to load the ultrasound probe onto the part such that the L-wave axis is initially aligned with the target vector, and then configured to search for a stronger backwall signal at different angular orientations. For instance, the apparatus could be controlled to perform a series of orbital motions, in a manner similar to that described above, and to analyse the backwall energies received to determine if there is another set of D and E angles which provide an even stronger backwall signal. With a probe that has calibrated according to the invention, the search can be more targeted than if the probe were not calibrated, thereby providing a speed benefit.

Further, it is noted that for a calibrated probe, it is possible to conduct discovery-mode measurements that compile useful backwall energy distribution information (e.g. polar coordinate maps) that can be used to independently gauge, classify or recognise the internal part geometry without requiring any thickness measurements to be performed, and this could be done from a single measurement point. For example, discovery mode measurements from an ultrasound axis calibrated probe allows planar and/or parallel geometries to be distinguished from planar wedge or curved geometries. Automated recognition of parallel and wedge geometries can improve measurement accuracy and reliability, as this can allow the system to automatically select an optimal time-delay estimation algorithm from which the thickness is derived. Discovery mode measurement from an ultrasound calibrated probe would also allow the wedge-angle to be estimated from a single measurement point.

Accordingly, the inventors have also devised a technique for obtaining lots of information about the backwall without actually having to perform thickness measurements/calculations. For example, they have found that with knowledge of the ultrasound probe's L-wave axis, it is possible to obtain and analyse a map of the backwall energy, which can provide a range of information about the backwall, for instance its form, for example its orientation and/or shape. For example, from a single point, a series of measurements at different angular orientations can be performed, (e.g. via orbital scans in a manner similar to that described above), in order to obtain an energy distribution map over an area of the backwall (e.g. polar coordinate map).

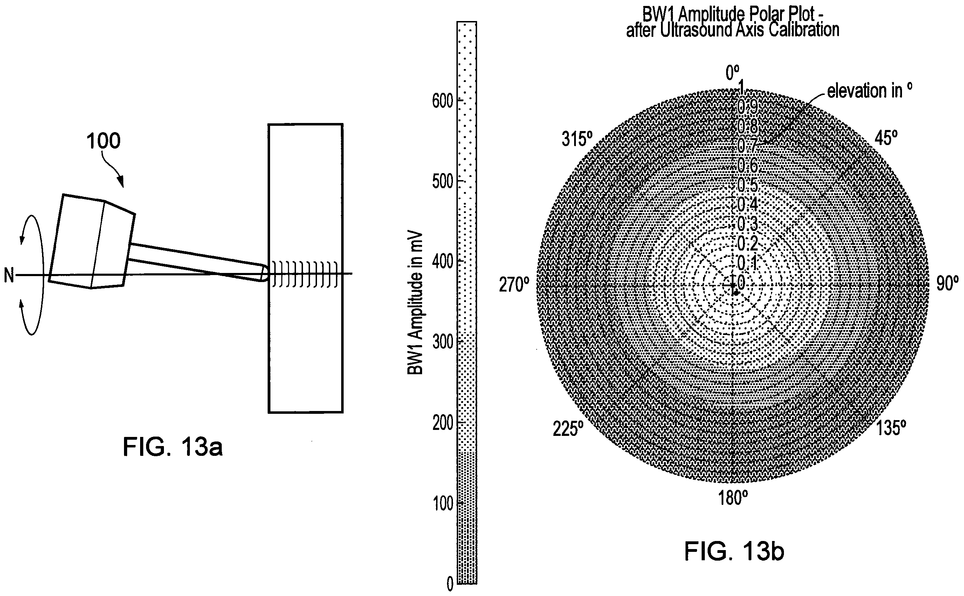

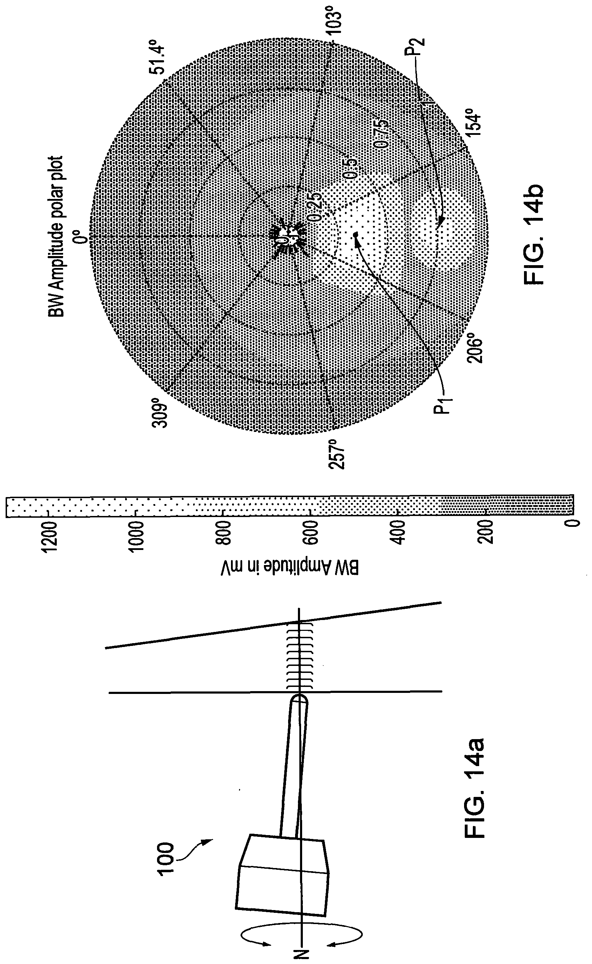

For example, Figure 13a illustrates a part having a planar and parallel backwall, and Figure 13b illustrates the backwall energy distribution map obtained from a series of orbital scans (taken at a single point) centred about the part's front-wall surface normal. Figure 14a illustrates a part having a planar but non-parallel backwall, and Figure 14b illustrates the backwall energy distribution map obtained from a series of orbital scans (taken at a single point) centred about the part's surface normal. As can be seen, the backwall energy distributions of these are different. As such, the energy maps are characteristic of the part geometry. Accordingly, the backwall energy distributions can be analysed in order to determine the form of the backwall. For instance, a symmetrical and centred energy distribution indicates a planar and parallel backwall.

Not only this, but as shown in Figure 14b, it can be seen that the backwall energy map obtained from a calibrated probe performing a series of orbital scans of a part having non-parallel front and back walls has two peaks; a first peak Pi and a second (smaller) peak $P_2$. The two energy peaks can be extracted using suitable time-gating within the measurement window of each A-scan. The first peak Pi relates to the target vector at which the faster L-waves return from the closest position on the planar backwall, and the second wider angle and smaller peak $P_2$ relates to the target vector at which slower shear waves (S-wave) return from this closest point on the backwall. From such a polar coordinate energy distribution map compiled with a calibrated probe that is characteristic of the inspection part geometry, the angles between the part surface normal and L-wave and S-wave peaks can be used together to allow an independent estimation of the ratio of the L-wave to S-wave sound speeds within the material to be estimated directly (e.g. without any thickness measurement or time-delay estimation being performed).

As such, further material characterisation information (e.g. elastic properties) about the part may be inferred as the ratio of longitudinal to shear wave sound speeds can be related to Poisson's ratio. Furthermore, if the density of the part material can be estimated, the elastic modulus of the material could also be estimated.

As will be understood, the above techniques for determining how to orient the probe in accordance with a target vector and for obtaining backwall information could also be used without having to calibrate the probe in accordance with the above described calibration techniques, if the ultrasound axis of the probe is known or can be assumed with confidence (e.g. because the probe has been built to very high tolerances and therefore it is known that the mechanical and ultrasound axes are aligned or have a particular relationship).

The embodiments described above describe using the ultrasound probe to measure the thickness of a part. As will be understood, ultrasound probes can be used for other purposes, such as detecting/measuring flaws in a part. The same calibration process can be used for calibrating an ultrasound probe which is to be used for flaw detection/measurement.

Also, the discovery mode measurements on a wedge part of known geometry could be used to estimate the sound speed in the part material (e.g. without having to do backwall time-delay estimation). Such sound speed in the part material could be determined from knowledge of the sound speed in the coupling element (which could be known or measured as described in WO2016/051147 and WO2016/051148, for example).

## Claims

1. A method of calibrating an ultrasound probe (100) having a coupling element (106) for engaging the surface of an object (10) to be inspected, in which the ultrasound probe and a calibration artefact (20) are provided on a positioning apparatus (200) having at least one axis (D, E) about which the relative orientation of the ultrasound probe and calibration artefact can be changed, the method comprising:

   i) for a plurality of different relative orientations between the ultrasound probe and the calibration artefact about the at least one axis, measuring the signal received by the ultrasound probe; and
   ii) from said measurements, determining at least one calibration parameter which is indicative of at least one axis of optimum signal of the ultrasound probe, and recording the at least one calibration parameter for subsequent use.

2. A method as claimed in claim 1, in which i) comprises changing the relative orientation of the ultrasound probe (100) and the calibration artefact (20) whilst the ultrasound probe's coupling element remains engaged with the calibration artefact.

3. A method as claimed in claim 1 or 2, in which the position of the ultrasound probe's coupling element (106) on the surface of the calibration artefact (20) is the substantially the same for each of the plurality of different relative orientations.

4. A method as claimed in any preceding claim, in which the positioning apparatus (200) comprises at least two axes (D, E) about which the relative orientation of the ultrasound probe (100) and calibration artefact (20) can be changed, and in which i) comprises: for a plurality of different relative orientations between the ultrasound probe and the calibration artefact about at least two of the at least two axes, measuring the signal received by the ultrasound probe.

5. A method as claimed in any preceding claim, comprising determining a map of the signal received by the ultrasound probe (100) with respect to the relative orientation between the ultrasound probe and the calibration artefact (20).

6. A method as claimed in any preceding claim, in which the at least one calibration parameter is indicative of the ultrasound probe's (100) longitudinal wave axis.

7. A method as claimed in any preceding claim, in which the coupling element (106) is a deformable coupling element.

8. A method as claimed in any preceding claim, in which determining the at least one calibration parameter comprises using known information about the orientation and geometry of the calibrated artefact (20).

9. A method as claimed in any preceding claim, further comprising for a given point on an object (10) to be inspected, determining a desired inspection axis and using the at least one calibration parameter to determine a desired relative orientation of the ultrasound probe (100) and object (10) such that the axis of optimum signal and desired inspection axis are arranged in accordance with predetermined criteria, in particular, in which the predetermined criteria is that the axis of optimum signal and desired inspection axis are substantially aligned.

10. A method as claimed in claim 9, comprising bringing the ultrasound probe (100) coupling element into engagement with said point on the object (10), in accordance with the desired relative orientation of the ultrasound probe and object, and subsequently changing the relative orientation of the probe and object about at least one axis to determine if a more optimum signal can be found at a different orientation.

11. A method as claimed in any preceding claim, in which the positioning apparatus (200) comprises a coordinate positioning apparatus, for example a coordinate measuring machine.

12. A method as claimed in any preceding claim, in which the ultrasound probe (100) is mounted on an articulated member (210), comprising the at least one axis (D, E).

13. An inspection apparatus (200) comprising:

   an ultrasound probe (100); and
   a record which comprises at least one calibration parameter indicative of at least one axis of optimum signal of the ultrasound probe;
   in which the inspection apparatus is configured to relatively orient the ultrasound probe and an object (10) using the record, and to obtain an ultrasound measurement of the object with the ultrasound probe and object at the relative orientation.

14. An inspection apparatus as claimed in claim 13, in which the at least one calibration parameter is indicative of the ultrasound probe's (100) longitudinal wave axis.

15. A method of inspecting an object (10) with an ultrasound probe (100) mounted on an inspection apparatus (200), the method comprising:

   taking a calibration parameter indicative of at least one axis of optimum signal of the ultrasound probe (100);
   determining how to relatively orient the ultrasound probe and object based on the calibration parameter; and
   controlling the motion of the inspection apparatus so as to bring the ultrasound probe into engagement with the object, in accordance with the determined orientation, and to obtain an ultrasound measurement of the object using the ultrasound probe.

**16.** An apparatus comprising:

an ultrasound probe (100) mounted on a positioning apparatus (200); and
a controller (220),

in which the controller is configured with computer program code comprising instructions configured to control the apparatus in accordance with the method of any of claims 1 to 12 or 15.

**Patentansprüche**

**1.** Verfahren zum Kalibrieren einer Ultraschallsonde (100), die ein Kopplungselement (106) zum Eingriff mit der Oberfläche eines zu prüfenden Objekts (10) aufweist, wobei die Ultraschallsonde und ein Kalibrierungsgegenstand (20) an einer Positionierungsvorrichtung (200) vorgesehen sind, die mindestens eine Achse (D, E) aufweist, um die die relative Orientierung der Ultraschallsonde und des Kalibrierungsgegenstands geändert werden kann, wobei das Verfahren umfasst:

i) Messen des von der Ultraschallsonde empfangenen Signals für eine Vielzahl unterschiedlicher relativer Orientierungen zwischen der Ultraschallsonde und dem Kalibrierungsgegenstand um die mindestens eine Achse; und
ii) Bestimmen mindestens eines Kalibrierungsparameters aus den Messungen, der mindestens eine Achse des optimalen Signals der Ultraschallsonde angibt, und Aufzeichnen des mindestens einen Kalibrierungsparameters zur späteren Verwendung.

**2.** Verfahren nach Anspruch 1, wobei i) ein Ändern der relativen Orientierung der Ultraschallsonde (100) und des Kalibrierungsgegenstandes (20) umfasst, während das Kopplungselement der Ultraschallsonde mit dem Kalibrierungsgegenstand in Eingriff bleibt.

**3.** Verfahren nach einem der Ansprüche 1 oder 2, wobei die Position des Kopplungselements (106) der Ultraschallsonde an der Oberfläche des Kalibrierungsgegenstands (20) für jede der Vielzahl unterschiedlicher relativer Orientierungen im Wesentlichen die gleiche ist.

**4.** Verfahren nach einem der vorhergehenden Ansprüche, wobei die Positioniervorrichtung (200) mindestens zwei Achsen (D, E) umfasst, um die die relative Orientierung der Ultraschallsonde (100) und des Kalibrierungsgegenstands (20) verändert werden kann, und wobei i) umfasst: Messen des von der Ultraschallsonde empfangenen Signals für eine Vielzahl unterschiedlicher relativer Orientierungen zwischen der Ultraschallsonde und dem Kalibrierungsgegenstand um mindestens zwei der mindestens zwei Achsen.

**5.** Verfahren nach einem der vorhergehenden Ansprüche, umfassend ein Bestimmen eines Kennfelds des von der Ultraschallsonde (100) empfangenen Signals in Bezug auf die relative Orientierung zwischen der Ultraschallsonde und dem Kalibrierungsgegenstand (20).

**6.** Verfahren nach einem der vorhergehenden Ansprüche, wobei der mindestens eine Kalibrierungsparameter die Achse der Longitudinalwelle der Ultraschallsonde (100) angibt.

**7.** Verfahren nach einem der vorhergehenden Ansprüche, wobei das Kopplungselement (106) ein verformbares Kopplungselement ist.

**8.** Verfahren nach einem der vorhergehenden Ansprüche, wobei das Bestimmen des mindestens einen Kalibrierungsparameters ein Verwenden bekannter Informationen über die Orientierung und Geometrie des kalibrierten Gegenstands (20) umfasst.

**9.** Verfahren nach einem der vorhergehenden Ansprüche, ferner umfassend für einen gegebenen Punkt an einem zu prüfenden Objekt (10): Bestimmen einer gewünschten Prüfachse und Verwenden des mindestens einen Kalibrierungsparameters, um eine gewünschte relative Orientierung der Ultraschallsonde (100) und des Objekts (10) zu bestimmen, so dass die Achse des optimalen Signals und die gewünschte Prüfachse in Übereinstimmung mit einem vorbestimmten Kriterium angeordnet sind, wobei das vorbestimmte Kriterium insbesondere darin besteht, dass die Achse des optimalen Signals und die gewünschte Prüfachse im Wesentlichen ausgerichtet sind.

**10.** Verfahren nach Anspruch 9, umfassend, Bringen des Kopplungselements der Ultraschallsonde (100) in Eingriff mit dem Punkt an dem Objekt (10) in Übereinstimmung mit der gewünschten relativen Orientierung der Ultraschallsonde und des Objekts und anschließend Ändern der relativen Orientierung der Sonde und des Objekts um mindestens eine Achse, um festzustellen, ob bei einer anderen Orientierung ein optimaleres Signal gefunden werden kann.

**11.** Verfahren nach einem der vorhergehenden Ansprüche, wobei die Positioniervorrichtung (200) eine Koordinatenpositioniervorrichtung, z.B. eine Koordinatenmessmaschine, umfasst.

**12.** Verfahren nach einem der vorhergehenden Ansprüche, wobei die Ultraschallsonde (100) an einem Gelenkteil (210) angebracht ist, das die mindestens eine Achse (D, E) aufweist.

**13.** Prüfvorrichtung (200), umfassend:

eine Ultraschallsonde (100); und
eine Aufzeichnung, die mindestens einen Kalibrierungsparameter umfasst, der mindestens eine Achse des optimalen Signals der Ultraschallsonde angibt;
wobei die Prüfvorrichtung so konfiguriert ist, dass sie die Ultraschallsonde und ein Objekt (10) unter Verwendung der Aufzeichnung relativ ausrichtet und eine Ultraschallmessung des Objekts mit der Ultraschallsonde und dem Objekt bei der relativen Orientierung erhält.

**14.** Prüfvorrichtung nach Anspruch 13, wobei der mindestens eine Kalibrierungsparameter die Achse der Longitudinalwelle der Ultraschallsonde (100) angibt.

**15.** Verfahren zum Prüfen eines Objekts (10) mit einer Ultraschallsonde (100), die an einer Prüfvorrichtung (200) angebracht ist, wobei das Verfahren umfasst:

Aufnehmen eines Kalibrierungsparameters, der mindestens eine Achse des optimalen Signals der Ultraschallsonde (100) angibt;
Bestimmen, wie die Ultraschallsonde und das Objekt relativ zu orientieren sind, auf der Grundlage des Kalibrierungsparameters; und
Steuern der Bewegung der Prüfvorrichtung, um die Ultraschallsonde in Eingriff mit dem Objekt in Übereinstimmung mit der bestimmten Orientierung zu bringen und eine Ultraschallmessung des Objekts unter Verwendung der Ultraschallsonde zu erhalten.

**16.** Vorrichtung, umfassend:

eine Ultraschallsonde (100), die an einer Positionierungsvorrichtung (200) montiert ist; und
eine Steuervorrichtung (220), wobei die Steuervorrichtung mit einem Computerprogrammcode konfiguriert ist, der Anweisungen umfasst, die so konfiguriert sind, dass sie die Vorrichtung gemäß dem Verfahren nach einem der Ansprüche 1 bis 12 oder 15 steuern.

**Revendications**

**1.** Un procédé d'étalonnage d'un palpeur à ultrasons (100) ayant un élément de couplage (106) pour venir en contact avec la surface d'un objet (10) à inspecter, dans lequel le palpeur à ultrasons et un artefact d'étalonnage (20) sont installés sur un appareil de positionnement (200) ayant au moins un axe (D, E) autour duquel l'orientation relative du palpeur à ultrasons et de l'artefact d'étalonnage peut être modifiée, le procédé comprenant :

i) pour une pluralité d'orientations relatives différentes entre le palpeur à ultrasons et l'artefact d'étalonnage autour dudit au moins un axe, la mesure du signal reçu par le palpeur à ultrasons ; et
ii) à partir desdites mesures, la détermination d'au moins un paramètre d'étalonnage qui est indicatif d'au moins un axe de signal optimal du palpeur à ultrasons, et l'enregistrement dudit au moins un paramètre d'étalonnage pour une utilisation ultérieure.

**2.** Un procédé selon la revendication 1, dans lequel i) comprend la modification de l'orientation relative du palpeur à ultrasons (100) et de l'artefact d'étalonnage (20) tandis que l'élément de couplage du palpeur à ultrasons reste en prise avec l'artefact d'étalonnage.

**3.** Un procédé selon la revendication 1 ou 2, dans lequel la position de l'élément de couplage (106) du palpeur à ultrasons sur la surface de l'artefact d'étalonnage (20) est sensiblement la même pour chacune de la pluralité d'orientations relatives différentes.

**4.** Un procédé selon l'une quelconque des revendications précédentes, dans lequel l'appareil de positionnement (200) comprend au moins deux axes (D, E) autour desquels l'orientation relative du palpeur à ultrasons (100) et l'artefact d'étalonnage (20) peut être modifiée, et dans lequel i) comprend pour une pluralité d'orientations relatives différentes entre le palpeur à ultrasons et l'artefact d'étalonnage autour d'au moins deux des au moins deux axes, la mesure du signal reçu par le palpeur à ultrasons.

**5.** Un procédé selon l'une quelconque des revendications précédentes, comprenant la détermination d'une carte du signal reçu par le palpeur à ultrasons (100) par rapport à l'orientation relative entre le palpeur à ultrasons et l'artefact d'étalonnage (20).

**6.** Un procédé selon l'une quelconque des revendications précédentes, dans lequel ledit au moins un paramètre d'étalonnage est indicatif de l'axe d'onde longitudinal du palpeur à ultrasons (100).

**7.** Un procédé tel que revendiqué dans l'une quelconque des revendications précédentes, dans lequel l'élément de couplage (106) est un élément de couplage déformable.

**8.** Un procédé selon l'une quelconque des revendications précédentes, dans lequel la détermination dudit au moins un paramètre d'étalonnage comprend l'utilisation d'informations connues concernant l'orientation et la géométrie de l'artefact étalonné (20).

**9.** Un procédé selon l'une quelconque des revendications précédentes, comprenant en outre, pour un point donné sur un objet (10) à inspecter, la détermination d'un axe d'inspection souhaité et l'utilisation dudit au moins un paramètre d'étalonnage pour déterminer une orientation relative souhaitée du palpeur à ultrasons (100) et de l'objet (10) de telle sorte que l'axe du signal optimal et l'axe d'inspection souhaité soient disposés selon des critères prédéterminés, en particulier, dans lequel le critère prédéterminé est que l'axe du signal optimal et l'axe d'inspection souhaité sont sensiblement alignés.

**10.** Un procédé selon la revendication 9, comprenant la mise en prise de l'élément de couplage du palpeur à ultrasons (100) avec ledit point sur l'objet (10), conformément à l'orientation relative souhaitée du palpeur à ultrasons et de l'objet, et la modification subséquente de l'orientation relative du palpeur et de l'objet autour d'au moins un axe pour déterminer si un signal plus optimal peut être trouvé à une orientation différente.

**11.** Un procédé tel que revendiqué dans l'une quelconque des revendications précédentes, dans lequel l'appareil de positionnement (200) comprend un appareil de positionnement par coordonnées, par exemple une machine à mesurer tridimensionnelle.

**12.** Un procédé selon l'une quelconque des revendications précédentes, dans lequel le palpeur à ultrasons (100) est monté sur un élément articulé (210), comprenant ledit au moins un axe (D, E).

**13.** Un appareil d'inspection (200) comprenant un palpeur à ultrasons (100) ; et

un enregistrement qui comprend au moins un paramètre d'étalonnage indiquant au moins un axe de signal optimal du palpeur à ultrasons.
dans lequel l'appareil d'inspection est configuré pour orienter relativement le palpeur à ultrasons et un objet (10) à l'aide de l'enregistrement, et pour obtenir une mesure par ultrasons de l'objet avec le palpeur à ultrasons et l'objet à l'orientation relative.

**14.** Un appareil d'inspection selon la revendication 13, dans lequel ledit au moins un paramètre d'étalonnage est indicatif de l'axe d'onde longitudinal du palpeur à ultrasons (100).

**15.** Un procédé d'inspection d'un objet (10) avec un palpeur à ultrasons (100) monté sur un appareil d'inspection (200), le procédé comprenant :

la prise d'un paramètre d'étalonnage indiquant au moins un axe de signal optimal du palpeur à ultrasons (100) ;

la détermination de comment orienter relativement le palpeur à ultrasons et l'objet en fonction du paramètre d'étalonnage, et

la commande du mouvement de l'appareil d'inspection de manière à amener le palpeur à ultrasons en prise avec l'objet, selon l'orientation déterminée, et à obtenir une mesure par ultrasons de l'objet à l'aide du palpeur à ultrasons.

16. Un appareil comprenant :

un palpeur à ultrasons (100) monté sur un appareil de positionnement (200) ; et un contrôleur (220),

dans lequel le contrôleur est configuré avec un code de programme informatique comprenant des instructions configurées pour commander l'appareil conformément au procédé selon l'une quelconque des revendications 1 à 12 ou 15.

FIG. 1

FIG. 2

**FIG. 3**

FIG. 4

Data Capture + Comms Interface

A-scans

Control

COMMS

114

Data

120

118

116

112

150

110

**FIG. 5**

100

10

103

105

Z

X

**FIG. 6**

FIG. 7

FIG. 8

FIG. 9

FIG. 10

BW1 Amplitude Polar Plot -
before Ultrasound Axis Calibration

FIG. 11a

BW1 Amplitude Polar Plot -
after Ultrasound Axis Calibration

FIG. 11b

BW1 Amplitude in mV

EP 3 931 526 B1

FIG. 12a

FIG. 12b

FIG. 12c

FIG. 12d

FIG. 13a

BW1 Amplitude Polar Plot -
after Ultrasound Axis Calibration

FIG. 13b

EP 3 931 526 B1

FIG. 14a

**BW Amplitude polar plot**

FIG. 14b

EP 3 931 526 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5189806 A
- WO 2009024783 A
- GB 2440959 A
- US 20090178482 A
- WO 2016051147 A
- WO 2016051148 A